# EUROPÄISCHE PATENTANMELDUNG

(11) **EP 3 741 788 A1**
(43) Veröffentlichungstag der Anmeldung: **25.11.2020**
(21) Anmeldenummer: 19176341.6
(22) Anmeldetag: 24.05.2019
(51) Int. Cl.: C08G 65/26, C08G 65/332

(54) **VERFAHREN ZUR HERSTELLUNG VON POLYOXYALKYLENPOLYOL-MISCHUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur direkten Herstellung von Mischungen kurzkettiger hochfunktioneller Polyoxyalkylenpolyole und langkettiger niedrigfunktioneller Polyoxyalkylenpolyole. Die kurzkettige hochfunktionelle Polyoxyalkylenpolyolkomponente wird erhalten durch Alkylenoxidaddition an hochfunktionelle H-funktionelle Starterverbindungen, während entsprechend die langkettige niederfunktionelle Polyoxyalkylenpolyolkomponente durch Alkylenoxidaddition an niederfunktionelle H-funktionelle Starterverbindungen erhalten wird. Ein weiterer Erfindungsgegenstand sind die daraus resultierenden Polyoxyalkylenpolyole sowie deren Umsetzung zur Herstellung von Polyurethanen.

## Beschreibung

Die vorliegende Erfindung betrifft ein Verfahren zur direkten Herstellung von Mischungen aus kurzkettigen hochfunktionellen Polyoxyalkylenpolyolen und langkettigen niedrigfunktionellen Polyoxyalkylenpolyolen. Die kurzkettige hochfunktionelle Polyoxyalkylenpolyolkomponente wird erhalten durch Alkylenoxidaddition an hochfunktionelle H-funktionelle Starterverbindungen, während entsprechend die langkettige niederfunktionelle Polyoxyalkylenpolyolkomponente durch Alkylenoxidaddition an niederfunktionelle H-funktionelle Starterverbindungen erhalten wird. Unter hochfunktionellen H-funktionellen Starterverbindungen im Sinne der Erfindung werden Verbindungen verstanden, die im Mittel mindestens drei Zerewitinoff-aktive Wasserstoffatome (d.h. beispielsweise über Hydroxy- und/oder Aminfunktionalität) aufweisen. Unter niederfunktionellen H-funktionellen Starterverbindungen im Sinne der Erfindung werden Verbindungen verstanden, die im Mittel maximal 3 Zerewitinoff-aktive Wasserstoffatome (d.h. beispielsweise über Hydroxy- und/oder Aminfunktionalität) aufweisen.

Ein an N, O, oder S gebundener Wasserstoff wird als Zerewitinoff-aktiver Wasserstoff bezeichnet, wenn er nach einem von Zerewitinoff aufgefundenen Verfahren durch Umsetzung mit Methylmagnesiumjodid Methan liefert. Typische Beispiele für Verbindungen mit Zerewitinoffaktivem Wasserstoff sind Verbindungen, die Carboxyl-, Hydroxyl-, Amino-, Imino- oder Thiol-Gruppen als funktionelle Gruppen enthalten.

Polyolformulierungen, die auf Basis hochfunktioneller Starterverbindungen wie beispielsweise Zucker, Oligo- und Polysaccharide, Zuckeralkohole (wie beispielsweise Mannit oder Sorbit) sowie Pentaerythrit hergestellte Polyetherpolyole enthalten, werden in der Regel in Polyurethananwendungen eingesetzt, insbesondere zur Herstellung von Polyurethanhartschaumstoffen, die für die Isolierung von Kältegeräten, Kühlcontainern, Rohren oder auch bei der Gebäudeisolierung verwendet werden. Polyolformulierungen basierend auf solchen auf Basis hochfunktioneller Starterverbindungen hergestellten Polyoxyalkylenpolyolen können mit Polyisocyanaten zu Hartschaumstoffen verarbeitet werden, wobei daraus hergestellte Isolierelemente (wie beispielsweise Kühlschrankgehäuse oder Isolierpaneele) schnell aus den Schäumformen entnommen werden können, ohne dass nennenswerte Verformungen der Isolierelemente eintreten. Darüber hinaus sollten auf Basis solcher Polyolformulierungen erhaltene Hartschaumstoffe eine ausreichende Haftung zu Deckschichten aller Art aufweisen und auch in der Lage sein, die zur Erzielung der gewünschten Rohdichte notwendige Menge an physikalischem Treibmittel (Alkane, Cycloalkane, Fluorkohlenwasserstoffe, teilfluorierte Olefine und dergleichen) zu lösen. Selbstverständlich ist es auch wünschenswert, dass die Einzelkomponenten solcher Formulierungen eine ausreichend niedrige Viskosität aufweisen, dies erleichtert die Handhabung der Substanzen beispielsweise bei der Herstellung der üblicherweise mehrere einzelne Polyolkomponenten enthaltenden Formulierungen.

Üblicherweise werden geringe Mengen (beispielsweise von 2 bis ca. 30 Gew.-%, bezogen auf die Menge aller isocyanatreaktiven Formulierungskomponenten) langkettiger Polyole mit Äquivalentmolmassen größer als 340 g / mol, bevorzugt größer als 370 g / mol, besonders bevorzugt größer als 400 g / mol in solchen Hartschaumstoffformulierungen eingesetzt. Sie vermitteln die Löslichkeit des physikalischen Treibmittels in der Formulierung und verbessern die Haftung an Deckschichten, wie beispielsweise den Kunststoffen der Kältegeräteinnengehäuse oder deren metallischen Außengehäusen. Zum Erhalt guter Entformeigenschaften ist es andererseits wichtig, dass ausreichende Mengen hochfunktioneller und kurzkettiger Polyoxyalkylenpolyole in den Formulierungen enthalten sind. Diese Komponenten weisen mittlere Funktionalitäten von mehr als 3,5, bevorzugt mehr als 4, besonders bevorzugt von 5 oder höher auf und ihre Äquivalentmolmassen liegen unter 190 g / mol, bevorzugt unter 160 g / mol. Diese hochfunktionellen und kurzkettigen Komponenten werden üblicherweise erhalten, indem man Schmelzen hochfunktioneller Starterverbindungen wie Sorbitol oder Gemische solcher hochfunktionellen Komponenten mit reaktiven Co-Startern wie Glycerin oder Glykolen mit Alkylenoxiden umsetzt. Insbesondere die Mitverwendung von Zuckern (z. B. der octafunktionellen Saccharose) als Starter ermöglicht den Erhalt sehr hochfunktioneller Polyetherpolyole, die Hartschaumstoffformulierungen ein hervorragendes Entformungsverhalten verleihen. Als nachteilig beim Einsatz von Saccharose erweist sich, dass diese nur unter Zersetzung schmelzbar ist. Ihr Einsatz als Starter für die Herstellung kurzkettiger hochfunktioneller Polyetherpolyole erfordert daher die Mitverwendung reaktiver, als Lösungsmittel wirksamer Co-Starter wie Glycerin oder Glykolen, beispielsweise Ethylenglykol oder Propylenglykol. Insbesondere letztere tragen signifikant zur Senkung der Viskosität des erhaltenen mischgestarteten Alkylenoxidadduktes bei. Ein großer Nachteil bei der Verwendung difunktioneller Co-Starter ist jedoch der damit einhergehende Verlust an Polyolmischfunktionalität, was den daraus erhaltenen Hartschaumstoffen keine optimalen Entformeigenschaften verleiht.

Es hat daher in der Vergangenheit nicht an Versuchen gefehlt, hochfunktionelle Starterverbindungen, wie insbesondere Saccharose, Alkylenoxidadditionen zugänglich zu machen mit dem Ziel, Polyoxyalkylenpolyole mit möglichst hohen Mischfunktionalitäten und dennoch möglichst niedrigen Viskositäten zu erhalten.

Zur Suspendierung der festen Starter wird in US 4,332,936 der Einsatz von Lösungsmitteln vorgeschlagen. In der DE 2241242 werden zum selben Zwecke aromatische Kohlenwasserstoffe verwendet. Als nachteilig erweist sich in beiden Fällen, dass wertvolles Reaktorvolumen für das Lösungsmittel zur Verfügung gestellt werden muss und aus Gründen der Nachhaltigkeit und Produkthygiene die Verwendung von organischen Lösungsmitteln im Allgemeinen nicht erwünscht ist.

In ähnlicher Weise werden in der US 3153002 Addukte von Zucker (Saccharose) und Alkylenoxiden (vorwiegend EO) erhalten, indem man als Lösungsmittel für die Alkylenoxidaddition Wasser verwendet. Unvorteilhaft bei diesem Verfahren ist, dass Wasser selbst als Starter wirkt und kurzkettige Glykole gebildet werden.

In der DE 1 276 622 B1 werden sehr kurzkettige Addukte von Starterverbindungen mit Alkylenoxiden als Suspendierungs- bzw. Lösungsmittel für die Herstellung von Alkylenoxidaddukten hochschmelzender / hochfunktioneller Starterverbindungen eingesetzt. Das Fehlen eines Polyoxyalkylenpolyols mit einer niedrigen OH-Zahl lässt gemäß dem Verfahren der DE 1 276 622 B1 Produkte mit sehr hohen Viskositäten entstehen.

In der DD 147469 werden bei der Alkylenoxidaddition an Saccharose andere niedermolekulare, aber leichter schmelzbare Costarter wie TMP oder Glycerin mitverwendet. Auch in der DD 219204 wird Saccharose in Gegenwart anderer OH- oder NH-funktioneller Costarter, ggf. gemeinsam mit Stärke oder Cellulose, mit Alkylenoxiden umgesetzt,. Solche Costarter können laut Beschreibung auch "sehr unterschiedliche" Molmassen aufweisen, genauer wird auf diese Costarter jedoch nicht eingegangen. In den Beispielen der DD 219204 werden nur niedermolekulare Costarter zum Einsatz gebracht.

In der DD 216248 werden als Co-Starter / Lösungsmittel für feste oder sehr hochviskose Starterverbindungen Alkoholkondensate eingesetzt, die durch sauer katalysierte Reaktionen erhalten worden sind, also im Wesentlichen oligomere, über saure Katalyse erhaltene Polyether. Über die Molmasse dieser Kondensations-Polyether wird an einer Stelle gesagt (Bsp. 3), dass sie eher kurzkettig sind und als minimale OH-Zahl für diese Co-Starter wird ein Wert von 320 mg KOH / g angegeben.

Die zu lösende Aufgabe der DE 4209358 bestand darin, Nebenreaktionen, die bei beim Einsatz hochfunktioneller, bei Raumtemperatur fester oder hochviskoser Starterverbindungen bei Alkylenoxidadditionsreaktionen auftreten können und beispielsweise zu Verfärbungen oder Schwierigkeiten in der Aufarbeitung des Polyoxyalkylenpolyols (hohen Restkaliumgehalten bei KOH-Katalyse) führen, zu unterdrücken. Die Aufgabe wird gelöst durch den Einsatz kleiner Mengen (0,51 - 5 %, bezogen auf den Gesamtansatz) von alkoxylierbaren aliphatischen Aminen neben den eigentlichen Startern. Es können zwar auch weitere flüssige, niedermolekulare Costarter mit eingesetzt werden, über deren Struktur wird jedoch nichts gesagt.

Die Patentanmeldung DE 10237910 beansprucht folgende Verfahrensweise für die Herstellung sehr hochfunktioneller Polyether mit hoher OHZ: Eine wasserlösliche Starterkomponente (bevorzugt Sorbitol) wird gemeinsam mit dem Katalysator (KOH) vorgelegt, danach wird ein anderer fester Starter (hier bevorzugt Saccharose) zugefügt und das Ganze im Vakuum schonend entwässert. Man erhält so eine sehr homogene Schmelzlösung der beiden Starterkomponenten ineinander, zudem vermeidet das Verfahren hohe thermische Belastungen des Saccharoseanteils an den Reaktorwandungen. Nach der Entwässerung wird die Alkoxylierung nach bekannter Verfahrensweise durchgeführt. Der Mischstart von Saccharose gemeinsam mit Sorbitol führt bei hohen Funktionalitäten angeblich zu niedrigeren Viskositäten als das Mischen der Einzelkomponenten. Optional können auch weitere Co-Starter eingesetzt werden, auf deren Kettenlänge / Äquivalentgewicht wird jedoch nicht eingegangen. In sehr ähnlicher Weise beschreibt auch die Patentanmeldung DE 102 37 914 A1 die Herstellung solcher Starterschmelzen, hier mit dem Ziel aus Glukosesirup und Sorbitol niedrigviskose Polyoxyalkylenpolyole zu erhalten. Sowohl in dem Verfahren nach DE 102 37 910 A1 als auch im Verfahren nach DE 102 37 914 A1 bewirkt die Abwesenheit des Polyoxyalkylenpolyols mit niedriger OH-Zahl, dass die Endprodukte hohe Viskositäten aufweisen, so dass diese Polyoxyalkylenpolyols nicht, aber mindestens nicht direkt, weiter umgesetzt werden können.

Der Stand der Technik stellt somit kein Herstellverfahren zur Verfügung, welches ermöglicht, direkt ein homogenes, einphasiges Gemisch aus einer oder mehreren niederfunktionellen langkettigen Polyoxyalkylenpolyolkomponenten und kurzkettigen höherfunktionellen Polyoxyalkylenpolyolkomponenten zu erhalten, wobei die resultierenden Polyoxyalkylenpolyol - Mischungen technisch handhabbare Viskositäten aufweisen, die eine unmittelbare Weiterverarbeitung zu Folgeprodukten, wie beispielsweise Polyurethanen, ermöglichen. Unter der direkten Herstellung eines solchen Gemisches wird die Kombination der beiden Polyoxyalkylenpolyolkomponenten, also einem ersten aus einem oder mehreren niederfunktionellen langkettigen Polyoxyalkylenpolyolen bestehenden Baustein und einem zweiten aus einem oder mehreren kurzkettigen höherfunktionellen Polyoxyalkylenpolyolen Baustein *in situ* während der Addition des oder der Alkylenoxide an die kurzkettige(n) hochfunktionelle(n) Starterkomponente(n) verstanden. Damit lässt sich die separate Handhabung des hochviskosen kurzkettigen Alkylenoxidadduktes des oder der hochfunktionellen Starter vermeiden.

Aufgabe der vorliegenden Erfindung war es somit, ein direktes, vereinfachtes Verfahren zur Herstellung eines einphasigen, homogenen Gemisches aus einer oder mehreren niederfunktionellen langkettigen Polyoxy¬alkylenpolyol¬komponente(n) und mindestens zwei kurzkettigen höherfunktionellen Polyoxyalkylen-polyolkomponenten mit technisch für eine unmittelbare Weiterverarbeitung zu Folgeprodukten, wie beispielsweise Polyurethanen, handhabbaren Viskositäten bereitzustellen.

Diese Aufgabe konnte überraschenderweise gelöst werden durch ein Verfahren zur Herstellung einer Polyoxyalkylenpolyol - Mischung umfassend mindestens 3 Polyoxyalkylenpolyole (a) (b) und (c), wobei die mittlere OH-Zahl der Polyoxyalkylenpolyol-Mischung 290 - 560 mg KOH / g beträgt und die OH-Zahl gemäß der Vorschrift der DIN 53240 bestimmt worden ist, wobei die berechnete mittlere OH-Zahl der Polyoxyalkylenpolyole (b) und (c) mindestens 360 mg KOH / g beträgt und die Polyoxyalkylenpolyol - Mischung durch Umsetzung eines Gemisches, umfassend mindestens ein Polyoxyalkylenpolyol (a), mindestens eine H-funktionelle Startersubstanz (b') und mindestens eine H-funktionelle Startersubstanz (c') mit einer OH-reaktiven Verbindung optional in Gegenwart eines Katalysators erhalten wird, wobei das Verfahren folgende Schritte umfasst
i) Bereitstellen einer Mischung (i) umfassend das Polyoxyalkylenpolyol (a), die H-funktionelle Startersubstanz (b'), sowie die H-funktionelle Startersubstanz (c');
ii) Umsetzen der Mischung (i) mit der OH-reaktiven Verbindung optional in Gegenwart des Katalysators;
   wobei das Polyoxyalkylenpolyol (a) eine Funktionalität F(a) von 2 bis 3 und eine berechnete OH-Zahl von 60 bis 168 mg KOH / g aufweist, wobei die H-funktionelle Startersubstanz (b') eine Funktionalität F(b') von 3 bis 8 und eine berechnete molare Masse von mindestens 60 g/mol aufweist, wobei die H-funktionellen Startersubstanz (c') eine Funktionalität F(c') von 3 bis 8 und eine berechnete molare Masse von mindestens 60 g/mol aufweist, wobei die H-funktionelle Startersubstanz (b') von der H-funktionellen Startersubstanz (c') verschieden ist, wobei die Schmelztemperatur der H-funktionellen Startersubstanz (b') und/oder der H-funktionellen Startersubstanz (c') kleiner als 150 °C ist und die berechnete zahlenmittlere Funktionalität der Mischung der H-funktionellen Startersubstanzen (b') und (c') mindestens 4,5 beträgt, und wobei die Differenz zwischen der berechneten mittleren OH-Zahl der Polyoxyalkylenpolyole (b) und (c) und der OH-Zahl des Polyoxyalkylenpolyols (a) zwischen 295 und 405 mg KOH / g beträgt.

In einer Ausführungsform erfolgt das Umsetzen der Mischung (i) mit der OH-reaktiven Verbindung in Schritt (ii) in Gegenwart eines Katalysators, wobei dieser ein basischer, ein Brönstedt-saurer, ein Lewis-saurer und/oder ein Doppelmetallcyanidkatalysator, bevorzugt ein basischer Katalysator ist.

Geeignete Polyoxyalkylenpolyole (a) weisen mittlere Starterfunktionalitäten zwischen 2 und 3 auf. Beispielsweise können geeignete Polyoxyalkylenpolyole (a) durch Addition von Alkylenoxiden an hydroxygruppenhaltige Starterverbindungen (a') wie beispielsweise Ethylenglykol, 1,2-Propylenglykol, 1,3-Propylenglykol, die verschiedenen Isomere des Butandiols, die verschiedenen Isomere des Hexandiols, oder auch cyclische Diole wie die verschiedenen Isomere des Cyclohexandiols erhalten werden. Verbindungen mit phenolischen Hydroxygruppen wie Bisphenol-A oder Bisphenol-F sowie die Isomere des Dihydroxybenzols sind ebenfalls geeignete Starterverbindungen (a'). Trifunktionelle oder gemischtfunktionelle Starterverbindungen sind beispielsweise Trimethylolpropan, Glycerin und Ricinusöl. Geeignete Starterverbindungen für den Erhalt von Polyoxyalkylenpolyolen (a) sind außerdem amingruppenhaltige Starterverbindungen wie Triethanolamin, Diethanolamin und Ethanolamin, sowie N-Methylethanolamin, N-Methyldiethanolamin, N-Alkylamine oder auch N-Alkylamine, die ihrerseits im Alkylreest weitere tertiäre Aminogruppen tragen, wie beispielsweise N,N-Dimethylaminopropylamin. Eine mittlere Starterfunktionalität zwischen 2 und 3 kann beispielsweise auch durch die Verwendung von Mischungen di- und trifunktioneller Starterverbindungen (a') eingestellt werden. Darüber hinaus ist es natürlich auch möglich solche mittleren Starterfunktionalitäten durch Mischen von difunktionellen Starterverbindungen mit Starterverbindungen, die eine Funktionalität von größer als 3 aufweisen, herzustellen. Solche Starterverbindungen sind beispielsweise Pentaerythrit, Sorbit oder Ethylendiamin.

Geeignete Startersubstanzen (b') und (c') weisen Funktionalitäten von 3 bis 8 auf. Geeignet sind beispielsweise Verbindungen ausgewählt aus der Gruppe bestehend aus Glycerin, Trimethylolpropan (TMP), Triethanolamin, Mono-, Oligo- und Polysacchariden, Pentaerythrit, Dipentaerythrit, Tripentaerythrit, Sorbit, cyclischen Polyolen, wie beispielsweise Inosit, Polyaminen, wie beispielsweise Verbindungen auf Basis hochfunktioneller mehrkerniger Anilin / Formaldehyd - Kondensationsprodukte ("polymeres MDA"), Isomeren bzw. Isomerengemischen des Toluylendiamins (insbesondere 2,4-TDA, 2,6-TDA, 2,3-TDA, 3,4-TDA) und aliphatischen Aminen wie Ethylendiamin. Eingesetzt werden können ebenfalls, wenn auch weniger bevorzugt, kurzkettige Alkylenoxidaddukte solcher Starterverbindungen. Bevorzugt werden als Startersubstanzen (b') und (c') Saccharose, Sorbit, Glycerin, TMP, die Isomere des Toluylendiamins und / oder Ethylendiamin eingesetzt, ganz besonders bevorzugt Saccharose, Sorbit, Glycerin und TMP. Insbesondere ist bevorzugt, dass eine der Startersubstanzen (b') oder (c') Saccharose ist.

Die berechnete zahlenmittlere Funktionalität der Mischung der H-funktionellen Startersubstanzen (b') und (c') beträgt mindestens 4,5 und bevorzugt mindestens 5. Mindestens eine der Startersubstanzen (b') und (c') weist einen Schmelzpunkt von kleiner als 150 °C auf. Bevorzugt weisen die H-funktionellen Startersubstanzen (b') und (c') OH- und/oder NH-Zahlen von größer 800 mg KOH / g auf.

Die mindestens eine Starterverbindung (b') und die mindestens eine Starterverbindung (c') werden in einem für die Durchführung von Alkylenoxidadditionsreaktionen geeigneten Reaktorsystem in dem mindestens einen Polyoxyalkylenpolyol (a) suspendiert, dispergiert oder aufgelöst. Das Verhältnis zwischen den beiden Starterverbindungen einerseits und dem mindestens einen Polyoxyalkylenpolyol (a) kann natürlich variiert werden. Das jeweils gewählte Verhältnis hängt zum Einen vom angestrebten Produktmix ab, zum Anderen muss natürlich eine ausreichende Rührbarkeit der Suspension, Dispersion bzw. der Lösung der Starterverbindungen in den in dem mindestens einen Polyoxyalkylenpolyol (a) gewährleistet sein, damit i) eine gleichmäßige Umsetzung der Starterverbindungen (b') und (c') mit den Alkylenoxiden stattfindet und damit ii) die entstehende Reaktionswärme hinreichend effektiv abgeführt werden kann. Vorzugsweise wird so verfahren, dass der Anteil des mindestens einen Polyoxyalkylenpolyols (a) im fertigen Produkt, also der Mischung aus dem mindestens einen Polyolxyalkylenpolyol (a), dem mindestens einen Polyoxyalkylenpolyol (b) und dem mindestens einen Polyoxyalkylenpolyol (c) 2 bis 30 Gew.% beträgt. Die rechnerische mittlere Funktionalität des Gemisches aus der mindestens einen Starterverbindung (b') und der mindestens einen Starterverbindung (c') beträgt zwischen 4,5 und 7,5, bevorzugt beträgt sie zwischen 5,0 und 7,5.

Der Suspension, Dispersion bzw. Lösung der mindestens einen Starterverbindung (b') und der mindestens einen Starterverbindung (c') in dem mindestens einen Polyoxyalkylenpolyole (a) wird ein Katalysator zugesetzt. Beispielsweise können Doppelmetallcyanid-Verbindungen (DMC-Verbindungen) als Katalysatoren zugesetzt werden. DMC-Katalysatoren, wie zum Beispiel in US 5,470,813, US 6,696,383, EP-A 0 700 949, EP-A 0 743 093, EP-A 0 761 708, WO-A 97/40086, WO-A 98/16310 und WO-A 00/47649 beschrieben, besitzen eine hohe Aktivität bei Alkylenoxidadditionsreaktionen an Starterverbindungen mit Zerewitinoff-aktiven Wasserstoffatomen und ermöglichen die Herstellung von Polyetherpolyolen bei sehr geringen Katalysatorkonzentrationen (100 ppm oder weniger), so dass die Abtrennung des DMC-Katalysators aus dem Polyetherpolyol vor dessen Verarbeitung zu Polyurethanen, z. B. Polyurethan-Schaumstoffen, nicht mehr erforderlich ist. Hierdurch wird die Wirtschaftlichkeit der technischen Polyetherpolyol-Produktion deutlich gesteigert. Alternativ kann das erfindungsgemäße Verfahren auch durch Lewis-Säuren wie beispielsweise Bortrifluorid-Etherat katalysiert werden. Solche Katalysatoren besitzen jedoch eine untergeordnete Bedeutung aufgrund ihrer Neigung zur Bildung von Nebenprodukten.

In einer Ausführungsform des erfindungsgemäßen Verfahrens ist der basische Katalysator ein Alkalihydroxid, Erdalkalihydroxid und/oder Amin bevorzugt ein Amin.

Bevorzugt werden im erfindungsgemäßen Verfahren basische Katalysatoren wie beispielsweise Alkalimetallhydride, Alkalimetallcarboxylate (beispielsweise solche von monofunktionellen Carbonsäuren), Alkalimetallhydroxide, Alkalimetallalkoxide (beispielsweise solche von monofunktionellen Alkoholen) oder Amine eingesetzt. Eine Übersicht über für das erfindungsgemäße Verfahren geeignete Amine ist von M. Ionescu et al. in "Advances in Urethanes Science and Technology", 1998, 14, S. 151-218 gegeben worden. Beispielsweise können N,N-Dimethylbenzylamin, Dimethylaminopropanol, N-Methyldiethanolamin, Trimethylamin, Triethylamin, N,N-Dimethylcyclohexylamin, N-Methylpyrrolidin, N,N,N',N'-Tetramethylethylendiamin, Diazabicyclo[2,2,2]-octan, 1,4-Dimethylpiperazin, N-Methylmorpholin, unsubstituiertes Imidazol und / oder alkylsubstituierte Imidazolderivate eingesetzt werden. Besonders bevorzugt werden im erfindungsgemäßen Verfahren als basische Katalysatoren Alkalimetallhydroxide (wie beispielsweise Natriumhydroxid, Kaliumhydroxid oder Cäsiumhydroxid) oder Amine eingesetzt. Die Alkalimetallhydroxide können als Feststoff oder als hochkonzentrierte wässrige Lösungen verwendet werden. Ganz besonders bevorzug werden im erfindungsgemäßen Verfahren Amine als Katalysatoren verwendet, unter diesen wiederum bevorzugt Imidazol oder alkylsubstituierte Imidazolderivate (wie beispielsweise N-Methylimidazol).

Die basischen Katalysatoren werden im Allgemeinen in einer auf die Endproduktmenge (d. h. auf die herzustellende Polyoxyalkylenpolyol - Mischung umfassend mindestens 3 Polyoxyalkylenpolyole (a) (b) und (c)) bezogenen Menge von 0,004 bis 0,8 Gew.-%, bevorzugt 0,004 bis 0,2 Gew.-% eingesetzt. Bei der Verwendung von Katalysatoren auf Alkalimetallhydroxidbasis oder bei Verwendung von N-Methyldiethanolamin ist zu beachten, dass während der Alkylenoxidadditionsreaktion geringe Mengen dihydroxyfunktioneller Polyethermoleküle entstehen können. Werden Alkalimetallhydroxide eingesetzt, so kann das Wasser, welches bei Zugabe der wässrigen Katalysatorlösung eingetragen wird und das bei der Reaktion der zerewitinoff-aktiven Wasserstoffe mit dem Alkalimetallhydroxid entstehende Wasser vor Beginn der Zugabe des Alkylenoxides auch durch einen (ggf. vakuumunterstützten) Destillationsschritt abgetrennt werden. Befinden sich unter der mindestens einen Starterverbindung (b') bzw. der mindestens einen Starterverbindung (c') ein Amin, so kann die Zugabe des Katalysators zum Reaktionsgemisch auch verspätet, d. h. erst nach Zugabe einer gewissen Menge Alkylenoxid zum katalysatorfreien Reaktionsgemisch, erfolgen.

Zu der Mischung der mindestens einen Starterverbindung (b'), der mindestens einen Starterverbindung (c') und dem mindestens einen Polyoxyalkylenpolyol (a) wird kontinuierlich eine OH-reaktive Verbindung, vorzugsweise ein Alkylenoxid, vorzugsweise unter Inertgasatmosphäre, dosiert. Das Alkylenoxid ist vorzugsweise mindestens eines ausgewählt aus der Gruppe bestehend aus Ethylenoxid, Propylenoxid, 1,2-Butylenoxid, 2,3-Butylenoxid und Styroloxid. Besonders bevorzugt sind Ethylenoxid, Propylenoxid oder eine Mischung von Propylenoxid und Ethylenoxid. Die Alkylenoxide können dem Reaktionsgemisch einzeln, im Gemisch oder nacheinander zugeführt werden. Werden die Alkylenoxide nacheinander dosiert, so enthalten die hergestellten Polyoxyalkylenpolyol - Mischungen Polyetherketten mit Blockstrukturen. Produkte mit Ethylenoxidendblöcken sind beispielsweise durch einen erhöhten Anteil an primären Endgruppen gekennzeichnet, welche der Polyoxyalkylenpolyol - Mischung eine erhöhte Reaktivität gegenüber Isocyanaten verleihen. Die Auswahl des jeweils verwendeten Alkylenoxids und die Entscheidung über deren Anordnung innerhalb der Polyetherketten werden im Hinblick auf die gewünschten Eigenschaften der Polyoxyalkylenpolyol - Mischung getroffen. Ganz besonders bevorzugt wird zur Herstellung der Polyoxyalkylenpolyol - Mischungen ausschließlich Propylenoxid eingesetzt.

In einer Ausführungsform des erfindungsgemäßen Verfahrens werden die Polyoxyalkylenpolyole (a) *in situ* direkt vor der Zugabe der der mindestens einen Starterverbindung (b') und der mindestens einen Starterverbindung (c') in demselben Reaktor hergestellt, in dem im Anschluss daran auch die Herstellung der erfindungsgemäßen Polyoxyalkylenpolyol-Mischungen stattfindet. Hierzu werden geeignete Starterverbindungen (a'), die beispielhaft bereits erwähnt worden sind, in dem zur Durchführung von Alkylenoxidadditionsreaktionen geeigneten Reaktorsystem zunächst in Abwesenheit der Starterverbindungen (b') und (c') mit Alkylenoxiden zumindest teilweise in Gegenwart von Katalysatoren zur Reaktion gebracht, bis die gewünschte Molmasse des Polyoxyalkylenpolyols (a) erreicht ist. Im Anschluss an diesen Schritt werden dann die mindestens eine Starterverbindung (b') und die mindestens eine Starterverbindung (c') zugesetzt und die Alkylenoxidaddition, ggf. unter Zusatz weiteren Katalysators, fortgeführt bis zum Erhalt der gewünschten Polyoxyalkylenpolyol-Mischung.

Vor dem Hintergrund der Verknappung petrochemischer Ressourcen und der nachteiligen Bewertung fossiler Rohstoffe in Ökobilanzen gewinnt der Einsatz von Rohstoffen aus nachwachsenden Quellen auch bei der Herstellung von für die Polyurethanindustrie geeigneten Polyolen zunehmend an Bedeutung. Im erfindungsgemäßen Verfahren zur Herstellung von Polyoxyalkylen-Mischungen können vor oder während der Addition der Alkylenoxide Triglyceride wie beispielsweise Sojaöl, Rapsöl, Palmkernöl, Palmöl, Leinöl, Sonnenblumenöl, Heringsöl, Sardinenöl, Lesquerellaöl und Ricinusöl oder andere Fettsäureester gemäß EP 1923417 dem Prozess in Mengen von 10 - 50 Gew.-%, bezogen auf die Endproduktmenge, zugesetzt werden. Werden hierbei Triglyceride oder Fettsäureester ohne Hydroxygruppen verwendet, so lässt sich bei gleichbleibender OH-Zahl die dem Triglycerid oder Fettsäureester entsprechende Menge an Alkylenoxid einsparen. Man erhält Polyoxyalkylenpolyesterpolyol-Mischungen, in deren Struktur die Öle durch parallel zur Alkylenoxidaddition ablaufende Umesterungsreaktionen vollständig eingebaut sind, so dass sie im Endprodukt nicht mehr oder nur in sehr geringen Mengen nachgewiesen werden können.

Die OH-reaktiven Verbindungen, insbesondere Alkylenoxide, werden in der gängigen Weise dem Reaktor kontinuierlich derart zugeführt, dass die sicherheitstechnischen Druckgrenzen des verwendeten Reaktorsystems nicht überschritten werden. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Die Alkylenoxide können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei Dosierung in die Flüssigphase sollten die Dosieraggregate selbstleerend ausgelegt sein, beispielsweise durch Anbringen der Dosierbohrungen an der Unterseite des Verteilerrings. Vorteilhafterweise kann durch apparative Maßnahmen, beispielsweise durch die Montage von Rückschlagklappen, ein Rückströmen von Reaktionsmedium in die alkylenoxidführenden Leitungen und Dosieraggregate bzw. in die Alkylenoxid-Vorratsbehälter verhindert werden. Vorzugsweise erfolgt die Umsetzung mit den OH-reaktiven Verbindungen, vorzugsweise die Alkoxylierung, bei einer Temperatur von 70 bis 170 °C, besonders bevorzugt bei einer Temperatur von 100 bis 150 °C. Die Temperatur kann während der Alkylenoxiddosierphase innerhalb der beschriebenen Grenzen variiert werden: Um eine optimale Abstimmung zwischen hohem Alkylenoxidumsatz und geringer Nebenproduktbildung bei Verwendung empfindlicher Starterverbindungen (wie beispielsweise Saccharose) zu erreichen, kann zunächst bei niedrigen Reaktionstemperaturen (beispielsweise bei 70 bis 110°C) alkoxyliert werden, und erst bei hinreichendem Starterumsatz (d. h. sobald mindestens 50 Gew.-% der eingesetzten Starterverbindungen an mindestens einem Zerewitinoff-aktiven Wasserstoffatom mit Alkylenoxid reagiert haben) zu höheren Reaktionstemperaturen (beispielsweise auf 110 bis 130 °C) übergegangen werden. Nachreaktionen können gegebenenfalls bei höheren Temperaturen (d.h. nach Anhebung der Temperatur auf 100 bis 170 °C, bevorzugt 100 bis 150 °C) durchgeführt werden. Die Temperatur der exothermen Alkylenoxidadditionsreaktion wird durch Kühlung auf dem gewünschten Niveau gehalten. Gemäß dem Stand der Technik zur Auslegung von Polymerisationsreaktoren für exotherme Reaktionen (z. B. Ullmann's Encyclopedia of Industrial Chemistry, Band B4, Seite 167ff, 5. Ausgabe, 1992) erfolgt eine solche Kühlung im Allgemeinen über die Reaktorwand (z. B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten- Rohrbündel- oder Mischerwärmetauschern. Diese sollten vorteilhafterweise so ausgelegt sein, dass auch zu Beginn der Dosierphase, d. h. bei kleinem Füllstand und / oder in Gegenwart eines möglicherweise heterogenen Reaktorinhalts (beispielsweise bei Vorliegen von Feststoffdispersionen oder Suspensionen) effektiv gekühlt werden kann.

Generell sollte in allen Reaktionsphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene Mischleistung, die im Allgemeinen im Bereich von 0,2 bis 5 W/l liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende der Dosier- und Nachreaktionsphase beobachtet werden, wenn Restalkylenoxide zusätzlich im Vakuum bei absoluten Drücken im Bereich von 1 bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung ausschließlich über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10:1 besitzen. Als Reaktorböden kommen beispielsweise Kugel-, Klöpper-, Flach,- oder Konusböden in Frage.

Nach Ende der Alkylenoxiddosierung oder bei einem Wechsel der Zusammensetzung des dosierten Alkylenoxidgemisches können sich Nachreaktionsphasen anschließen, in denen die Abnahme der Konzentration an unreagiertem Alkylenoxid durch Überwachung des Drucks quantifiziert werden kann. Gegebenenfalls kann das Reaktionsgemisch nach Ende der letzten Nachreaktionsphase von kleinen Mengen an nicht umgesetzten Alkylenoxiden im Vakuum, beispielsweise bei einem absoluten Druck von 1 bis 500 mbar, oder durch Strippen vollständig befreit werden. Durch Strippen werden flüchtige Bestandteile, wie beispielsweise (Rest-)Alkylenoxide, unter Einleiten von Inertgasen und/oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C und vorzugsweise bei Reaktionstemperatur unter Rühren. Solche Strippvorgänge können auch in sogenannten Strippkolonnen durchgeführt werden, in denen dem Produktstrom ein Inertgas- oder Wasserdampfstrom entgegengeleitet wird. Bevorzugt werden zu diesem Zweck Strippkolonnen mit Füllkörpern oder Einbauten verwendet. Solche Strippvorgänge können auch kontinuierlich durchgeführt werden, indem beispielsweise das nicht gestrippte Material in einem Pufferbehälter gesammelt und aus diesem kontinuierlich der Strippkolonne zugeführt wird. Nach Erreichen von Druckkonstanz in der Nachreaktionsphase und ggf. nach Entfernen flüchtiger Bestandteile durch Vakuum und/oder Strippen kann das Produkt aus dem Reaktor abgelassen oder Nachbehandlungsschritten, insbesondere Aufarbeitungsschritten zugeführt werden.

Die aus Schritt ii) resultierende rohe Polyoxyalkylenpolyol-Mischung kann optional Aufarbeitungsschritten unterzogen werden, um etwaige Katalysatorspuren zu entfernen. Im Falle von mit Aminen oder hochaktiven DMC-Verbindungen katalysierten Alkylenoxidadditionsreaktionen sind solche Nachbehandlungsschritte im Allgemeinen nicht erforderlich. Die optionale Entfernung des Katalysators aus der aus Schritt ii) resultierenden rohen Polyoxyalkylenpolyol-Mischung kann auf verschiedene Weise erfolgen: Beispielsweise kann der basische Katalysator mit verdünnten Mineralsäuren wie Schwefelsäure oder Phosphorsäure neutralisiert werden. Die bei der Neutralisation entstehenden Salze werden abgetrennt, beispielsweise durch Filtration. Ausnahmen bilden die in EP-A 2028211 und WO-A 2009106244 beschriebenen Polyetherpolyolherstellverfahren. Alternativ kann die Neutralisation mit Hydroxycarbonsäuren (wie beispielsweise Milchsäure, wie in WO-A 9820061 und US-A 2004167316 beschrieben) erfolgen. Ebenso geeignet zur Neutralisation sind Carbonsäuren wie beispielsweise Ameisensäure (vgl. US 4,521,548). Die nach Neutralisation mit Carbonsäuren (wie beispielsweise Hydroxycarbonsäuren oder Ameisensäure) entstehenden Metallcarboxylate sind in den Polyetherpolyolen klar löslich, so dass die Abtrennung der Salze hier entfallen kann. Die Neutralisation kann beispielsweise auch durch Zugabe von cyclischen Dicarbonsäureanhydriden, wie Phthalsäureanhydrid, Maleinsäureanhydrid, Tetrahydrophthalsäureanhydrid oder Bernsteinsäureanhydrid erfolgen, wobei ebenfalls in den erfindungsgemäßen Polyoxyalkylenpolyol-Mischungen lösliche Salze erhalten werden. Desgleichen ist die Verwendung von Ringöffnungsprodukten cyclischer Carbonsäureanhydride mit Polyolen, also von Dicarbonsäurehalbestern, als Neutralisationsagenzien möglich. Schließlich sei noch darauf hingewiesen, dass sich die unvollständig alkoxylierten Oxosäuren des Phosphors ebenfalls als Neutralisationssäuren eignen. Ebenfalls möglich ist zur Entfernung des Katalysators der Einsatz von sauren Kationenaustauschern, wie beispielsweise in DE-A 100 24 313 beschrieben. Des Weiteren können die Katalysatoren mittels Adsorbentien wie beispielsweise Schichtsilikaten (Bentonit, Attapulgit), Diatomeenerde oder auch synthetischen Magnesiumsilikaten (wie AMBOSOL® oder BriteSorb®) abgetrennt werden. Solche Aufreinigungsverfahren sind beschrieben in RO 118433, US 4,507,475, EP-A 0693513 und EP-A 1751213. Phasentrennverfahren sind prinzipiell ebenfalls möglich, jedoch sind im Allgemeinen die Wasserlöslichkeiten der hochfunktionellen Bestandteile des Reaktionsgemisches für eine effektive Durchführung von Phasentrennverfahren zu hoch. Phasentrennverfahren sind beispielsweise beschrieben in WO-A 0114456, JP-A 6-157743, WO-A 9620972 und US-A 3823145.

Es wird empfohlen, die Herstellung der erfindungsgemäßen Polyoxyalkylenpolyol - Mischungen unter Sauerstoffausschluss durchzuführen. Auch für fertig aufgearbeitete, salzfreie und stabilisierte erfindungsgemäße Polyoxyalkylenpolyol - Mischungen werden Handhabung und Lagerung unter Sauerstoffausschluss empfohlen. Hierfür geeignete Inertgase sind beispielsweise Edelgase, oder Stickstoff oder Kohlendioxid, besonders geeignet sind Edelgase oder Stickstoff. Durch die Unterbindung von Sauerstoffzutritt lassen sich Produktverfärbungen weitestgehend vermeiden, dies gilt insbesondere bei erhöhten Temperaturen, die im Allgemeinen genutzt werden um durch Senkung der Produktviskosität die Handhabung der Fertigprodukte zu erleichtern. Darüber hinaus entstehen unter Inertgasatmosphäre auch deutlich weniger Peroxidgruppen, die unter Spaltung der Polyetherketten zur Bildung weiterer niedermolekularer oxidativer Abbauprodukte wie beispielsweise Acetaldehyd, Methanol, Ameisensäure, Ameisensäureester, Aceton und Formaldehyd beitragen. Somit können während der Lagerung der Fertigprodukte Qualitätsminderungen minimiert, der Gehalt an leichtflüchtigen organischen Verbindungen gesenkt und Geruchsbelästigungen sowie gesundheitliche Beeinträchtigungen vermieden werden.

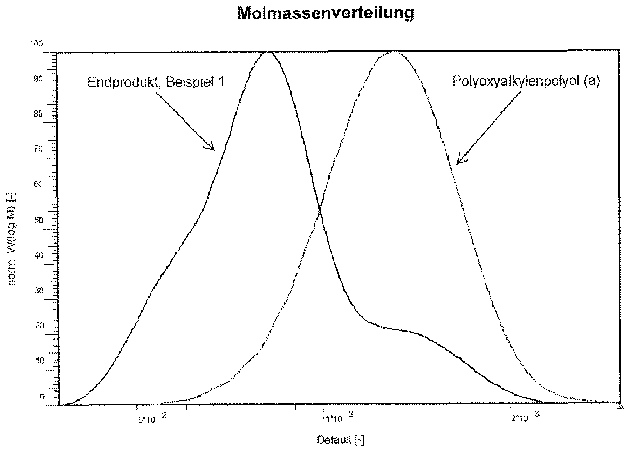

Die in Schritt ii) erfolgende Umsetzung der Mischung (i) mit der OH-reaktiven Verbindung, insbesondere mit dem oder den Alkylenoxid(en), erfolgt in der Tat so, dass das Alkylenoxid bevorzugt mit den zerewitinoff-aktiven Wasserstoffen der Starterverbindungen (b') und (c') reagiert und praktisch nicht mit den Hydroxygruppen der Polyoxyalkylenverbindung (a), siehe Fig. 1. Ohne sich an eine Theorie binden zu wollen, wird vermutet, dass dies i) auf die im Vergleich zur Zahl an die Polyoxyalkylenverbindungen (a) gebundenen Hydroxygruppen deutlich höhere Zahl der an die Starterverbindungen (b') und (c') gebundenen zerewitinoff-aktiven Wasserstoffatome zurückzuführen ist, und / oder dass zu Beginn der Zudosierung des oder der Alkylenoxide keine ausreichende Löslichkeit des Gemisches der mindestens einen Starterverbindung (b'), der mindestens einen Starterverbindung (c') und des Katalysators im verhältnismäßig unpolaren Polyoxyalkylenpolyol (a) gegeben ist, so dass die Starterverbindungen (b'), (c') und der Katalysator ein separates Reaktionssystem bilden, in dem die Umsetzung mit dem oder den Alkylenoxiden praktisch ausschließlich erfolgt.

Den erfindungsgemäßen Polyoxyalkylenpolyol - Mischungen können Antioxidanzmittel (z. B. auf Basis von Phenolderivaten und / oder auf Basis von Aminen) zugesetzt werden. Wird ein Alkalimethallhydroxid zur Katalyse der Alkylenoxidaddition an die eingesetzten Starterverbindungen verwendet, so empfiehlt es sich, solche Antioxidanzmittel erst nach Neutralisierung bzw. Abtrennung dieser Katalysatorspuren zuzusetzen, da auf diese Weise Verfärbungen der Polyoxyalkylenpolyol - Mischungen vermieden werden können.

Die nach dem erfindungsgemäßen Verfahren erhältlichen Polyoxyalkylenpolyol - Mischungen können als Ausgangskomponenten für die Herstellung von massiven oder geschäumten Polyurethanwerkstoffen und, weniger bevorzugt, auch zum Erhalt von Polyurethanelastomeren eingesetzt werden. Die Polyurethanwerkstoffe und -elastomere können auch Isocyanurat-, Allophanat- und Biuretstruktureinheiten enthalten.

Zur Herstellung dieser Materialien werden
1. die erfindungsgemäßen Polyetheresterpolyole gegebenenfalls mit weiteren isocyanatreaktiven Komponenten gemischt und mit
2. organischen Polyisocyanaten,
3. gegebenenfalls in Gegenwart von Treibmitteln,
4. in Gegenwart von Katalysatoren
5. gegebenenfalls in Gegenwart anderer Zusatzstoffe wie z. B. Zellstabilisatoren
zur Reaktion gebracht.

Den erfindungsgemäßen Polyoxyalkylenpolyol - Mischungen können gegebenenfalls als weitere isocyanatreaktive Komponenten Polyoxyalkylenpolyole, Polyesterpolyole, Polycarbonatpolyole, Polyethercarbonatpolyole, Polyestercarbonatpolyole, Polyetherestercarbonatpolyole und/oder niedermolekulare Kettenverlängerungs- und/oder Vernetzungsmittel mit OH-Zahlen bzw. NH-Zahlen von 6 bis 1870 mg KOH/g beigemischt werden.

Hierfür geeignete Polyoxyalkylenpolyole können beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 Zerewitinoff-aktive Wasserstoffatome gebunden enthält, oder durch kationische Polymerisation von Alkylenoxiden in Gegenwart von Brønstedt- oder Lewis-Säuren wie Trifluormethansulfonsäure, Perchlorsäure, Antimonpentachlorid, Bortrifluorid-Etherat, oder Tris(pentafluorphenyl)boran erhalten werden. Geeignete Katalysatoren sind natürlich auch solche vom Doppelmetallcyanidkomplextyp, wie sie beispielsweise in US-A 3 404 109, US-A 3 829 505, US-A 3 941 849, US-A 5 158 922, US-A 5 470 813, EP-A 700 949, EP-A 743 093, EP-A 761 708, WO 97/40086, WO 98/16310 und WO 00/47649 beschrieben sind. Geeignete Alkylenoxide sowie einige geeignete Starterverbindungen sind in vorangegangenen Abschnitten bereits beschrieben worden. Ergänzend zu erwähnen sind beispielsweise Tetrahydrofuran als lewis-sauer polymerisierbarer cyclischer Ether und Wasser als Startermolekül. Die Polyoxyalkylenpolyole, vorzugsweise Polyoxypropylen-polyoxyethylen-polyole, besitzen vorzugsweise zahlenmittlere Molmassen von 200 bis 8000 Da. Als Polyoxyalkylenpolyole eignen sich ferner polymermodifizierte Polyoxyalkylenpolyole, vorzugsweise Pfropfpolyoxyalkylenpolyole, insbesondere solche auf Styrol- und/oder Acrylnitrilbasis, die durch in-situ Polymerisation von Acrylnitril, Styrol oder vorzugsweise Mischungen aus Styrol und Acrylnitril, z.B. im Gewichtsverhältnis 90:10 bis 10:90. vorzugsweise 70:30 bis 30:70, zweckmäßigerweise in den vorgenannten Polyoxyalkylenpolyolen hergestellt werden, sowie Polyoxyalkylenpolyol-Dispersionen, die als disperse Phase, üblicherweise in einer Menge von 1 bis 50 Gew.-%, vorzugsweise 2 bis 25 Gew.-%, anorganische Füllstoffe, Polyharnstoffe, Polyhydrazide, tert.-Aminogruppen gebunden enthaltende Polyurethane und/oder Melamin enthalten.

Geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäuremono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 / 40 bis 60 / 20 bis 36 Gew.-Teilen und insbesondere Adipinsäure. Beispiele für zwei- und mehrwertige Alkohole sind Ethandiol, Diethylenglykol, 1,2- bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,10-Decandiol, 1,12-Dodecandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten mehrwertigen Alkohole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. Hydroxycapronsäure und Hydroxyessigsäure.

Zur Herstellung der Polyesterpolyole können die organischen, aromatischen oder aliphatischen Polycarbonsäuren und/oder Polycarbonsäurederivate und mehrwertigen Alkohole katalysatorfrei oder in Gegenwart von Veresterungskatalysatoren, zweckmäßigerweise in einer Atmosphäre aus Inertgasen, wie z.B. Stickstoff, Helium oder Argon und auch in der Schmelze bei Temperaturen von 150 bis 300°C, vorzugsweise 180 bis 230°C gegebenenfalls unter vermindertem Druck bis zu den gewünschten Säure- und OH-Zahlen, polykondensiert werden. Die Säurezahl ist vorteilhafterweise kleiner als 10, vorzugsweise kleiner als 2,5.

Nach einem bevorzugten Herstellverfahren wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 1 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählende Alkoholfunktionalität kann vom Fachmann in einfacher Weise ermittelt werden.

Geeignete Polycarbonatpolyole sind solche der an sich bekannten Art, die beispielsweise durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexamethylenglykol mit Diarylcarbonaten und/oder Dialkylcarbonaten, z. B. Diphenylcarbonat, Dimethylcarbonat sowie α-ω-Bischloroformiaten oder Phosgen hergestellt werden können. Die ebenfalls geeigneten Polyethercarbonatpolyole werden durch Copolymerisation cyclischer Epoxide und Kohlendioxid erhalten, vorzugsweise werden solche Copolymerisationen unter hohemDruck durchgeführt und durch Doppelmetallcyanid- (DMC-)Verbindungen katalysiert.

Niedermolekulare, vorzugsweise tri- oder tetrafunktionelle Vernetzungsmittel oder difunktionale Kettenverlängerungsmittel können den erfindungsgemäß einzusetzenden Polyoxyalkylenpolyol-Mischungen zur Modifizierung der mechanischen Eigenschaften, insbesondere der Härte der PUR-Werkstoffe beigemischt werden. Geeignete Vernetzungsmittel, z. B. 3- oder 4-wertige Alkohole und oligomere Polyoxyalkylen-polyole mit einer Funktionalität von 3 bis 4, besitzen üblicherweise Molmassen von 90 bis 300 Da. Geeignete Vernetzungsmittel sind beispielsweise Glycerin, Trimethylolpropan oder Pentaerythrit. Als Kettenverlängerungsmittel vorzugsweise verwendet werden Alkandiole mit 2 bis 12 Kohlenstoffatomen, z.B. Ethandiol, 1,3-Propandiol, 1,5-Pentandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z.B. Diethylengykol und Dipropylengykol. Geeignet sind auch verzweigtkettige und/oder ungesättigte Alkandiole mit üblicherweise nicht mehr als 12 Kohlenstoffatomen, wie z.B. 1,2-Propandiol, 2-Methyl-1,3-Propandiol, 3-Methyl-1,5-pentandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykolester oder Terephthalsäure-bis-1,4-butylenglykolester und Hydroxyalkylenether des Hydrochinons oder Resorcins, z.B. 1,4-Di-(β-hydroxyethyl)-hydrochinon oder 1,3-(β-Hydroxyethyl)-resorcin. Auch können Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Di-sec.-pentyl-, N,N'-Di-sec.-hexyl-, N,N'-Di-sec.-decyl- und N,N'-Dicyclohexyl-, p- bzw. m-Phenylendiamin, N,N'-Dimethyl-, N,N'-Diethyl-, N,N'-Diisopropyl-, N,N'-Di-sec.butyl-, N,N'-Dicyclohexyl-4,4'-diamino-diphenylmethan, N,N'-Di-sec.-butylbenzidin, Methylen-bis(4-amino-3-benzoesäuremethylester), 2,4-Chlor-4,4'-diamino-diphenylmethan, 2,4- und 2,6-Toluylendiamin verwendet werden.

Verwendbar sind auch Gemische unterschiedlicher Kettenverlängerungs- und Vernetzungsmittel untereinander sowie Gemische aus Kettenverlängerungs- und Vernetzungsmitteln.

Geeignete organische Polyisocyanate sind cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel Q(NCO)n in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten. Geeignet sind z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und - 1,4-diisocyanat sowie beliebige Gemische dieser Isomeren, 1-Isocyanato-3,3,5-tri-methyl-5-isocyanatomethyl-cyclohexan (DE-B 1 202 785, US-A 3 401 190), 2,4- und 2,6-Hexahydrotoluylendiisocyanat sowie beliebige Gemische dieser Isomeren, Hexahydro-1,3- und - 1,4-phenylen-diisocyanat, Perhydro-2,4'- und -4,4'-diphenyl-methan-diisocyanat, 1,3- und 1,4-Phenylendiisocyanat (DE-A 196 27 907), 1,4-Duroldiisocyanat (DDI), 4,4'-Stilbendiisocyanat (DE-A 196 28 145), 3,3'-Dimethyl-4,4'-biphenylendiisocyanat (DIBDI) (DE-A 195 09 819) 2,4- und 2,6-Toluylendiisocyanat (TDI) sowie beliebige Gemische dieser Isomeren, Diphenylmethan-2,4'-diisocyanat und/oder Diphenylmethan-4,4'-diisocyanat (MDI) oder Naphthylen-1,5-diisocyanat (NDI).

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-A 874 430 und GB-A 848 671 beschrieben werden, m- und p-Isocyanatophenylsulfonylisocyanate gemäß US-A 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, 25 37 685 und 25 52 350 beschrieben werden, Norbornan-diisocyanate gemäß US-A 3 492 301, Allophanatgruppen aufweisende Polyisocyanate, wie sie in GB-A 994 890, der BE-B 761 626 und NL-A 7 102 524 beschrieben werden, Isocyanuratgruppen aufweisende Polyisocyanate, wie sie in US-A 3 001 9731, in DE-C 10 22 789, 12 22 067 und 1 027 394 sowie in DE-A 1 929 034 und 2 004 048 beschrieben werden, Urethangruppen aufweisende Polyisocyanate, wie sie z.B. in der BE-B 752 261 oder in US-A 3 394 164 und 3 644 457 beschrieben werden, acylierte Harnstoffgruppen aufweisende Polyisocyanate gemäß DE-C 1 230 778, Biuretgruppen aufweisende Polyisocyanate, wie sie in US-A 3 124 605, 3 201 372 und 3 124 605 sowie in GB-B 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-B 965 474 und 1 072 956, in USA 3 567 763 und in DE-C 12 31 688 genannt werden, Umsetzungsprodukte der obengenannten Isocyanate mit Acetalen gemäß DE-C 1 072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("Roh-MDI") und Carbodiimidgruppen, Urethangrupppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Es können auch Isocyanatgruppen aufweisende Prepolymere verwendet werden, die erhältlich sind durch Umsetzung einer Teil- oder der Gesamtmenge der erfindungsgemäß einzusetzenden Polyetheresterpolyole und / oder einer Teil- oder der Gesamtmenge der den erfindungsgemäß einzusetzenden Polyetheresterpolyolen ggf. beizumischenden, oben beschriebenen isocyanatreaktiven Komponenten mit mindestens einem aromatischen Di- oder Polyisocyanat aus der Gruppe TDI, MDI, DIBDI, NDI, DDI, vorzugsweise mit 4,4'-MDI und/oder 2,4-TDI und/oder 1,5-NDI zu einem Urethangruppen, vorzugsweise Urethangruppen und Isocyanatgruppen aufweisenden Polyadditionsprodukt. Solche Polyadditionsprodukte weisen NCO-Gehalte von 0,05 bis 40,0 Gew.-% auf. Nach einer bevorzugt angewandten Ausführungsform werden die Isocyanatgruppen enthaltenden Prepolymere hergestellt durch Umsetzung von ausschließlich höhermolekularen Polyhydroxylverbindungen, also den erfindungsgemäß einzusetzenden Polyoxyalkylenpolyol-Mischungen, und / oder Polyetheresterpolyolen, Polyetherpolyolen, Polyesterpolyolen oder Polycarbonatpolyolen mit den Polyisocyanaten, vorzugsweise 4,4'-MDI, 2,4-TDI und/oder 1,5-NDI.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung zur Herstellung der PUR-Werkstoffe zuzufügen.

Als gegebenenfalls einzusetzendes Treibmittel kann Wasser verwendet werden, das mit den organischen Polyisocyanaten oder mit den Isocyanatgruppen aufweisenden Prepolymeren in situ unter Bildung von Kohlendioxid und Aminogruppen reagiert, die ihrerseits mit weiteren Isocyanatgruppen zu Harnstoffgruppen weiterreagieren und hierbei als Kettenverlängerungsmittel wirken. Wird, um die gewünschte Dichte einzustellen, der Polyurethanformulierung Wasser zugegeben, wird dieses üblicherweise in Mengen von 0,001 bis 6,0 Gew.-%, bezogen auf das Gewicht der Komponenten 1, 4 und 5 verwendet.

Als Treibmittel können anstelle von Wasser oder vorzugsweise in Kombination mit Wasser auch Gase oder leicht flüchtige anorganische oder organische Substanzen, die unter dem Einfluß der exothermen Polyadditionsreaktion verdampfen und vorteilhafterweise einen Siedepunkt unter Normaldruck im Bereich von -40 bis 120 °C, vorzugsweise von 10 bis 90 °C besitzen, als physikalische Treibmittel eingesetzt werden. Als organische Treibmittel können z.B. Aceton, Ethylacetat, Methylacetat, halogensubstituierte Alkane wie Methylenchlorid, Chloroform, Ethylidenchlorid, Vinylidenchlorid, Monofluortrichlormethan, Chlordifluormethan, Dichlordifluormethan, HFKWs wie R 134a, R 245fa und R 365mfc, teilhalogenierte Olefine (sogenannte HFOs oder HCFOs) wie trans-1,3,3,3-Tetrafluorpropen oder trans-1-Chlor-3,3,3-trifluorpropen, ferner unsubstituierte Alkane wie Butan, n-Pentan, Isopentan, Cyclopentan, Hexan, Heptan oder Diethylether verwendet werden. Diese Treibmittel können auch als Gemische verwendet werden. Als anorganische Treibmittel kommen z.B. Luft, CO₂ oder N₂O in Frage. Eine Treibwirkung kann auch erzielt werden durch Zusatz von Verbindungen, die sich bei Temperaturen oberhalb Raumtemperatur unter Abspaltung von Gasen, beispielsweise von Stickstoff und/oder Kohlendioxid, zersetzen wie Azoverbindungen, z.B. Azodicarbonamid oder Azoisobuttersäurenitril, oder Salzen wie Ammoniumbicarbonat, Ammoniumcarbamat oder Ammoniumsalzen organischer Carbonsäuren, z.B. der Monoammoniumsalze der Malonsäure, Borsäure, Ameisensäure oder Essigsäure. Weitere Beispiele für Treibmittel, Einzelheiten über die Verwendung von Treibmitteln und Kriterien für die Treibmittelwahl sind in R. Vieweg, A. Höchtlen (Hrsg.): "Kunststoff-Handbuch", Band VII, Carl-Hanser-Verlag, München 1966, S. 108f, 453ff und 507-510 sowie in D. Randall, S. Lee (Hrsg.): "The Polyurethanes Book", John Wiley & Sons, Ltd., London 2002, S. 127 - 136, S 232 - 233 und S. 261 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen eingesetzt werden können, hängt ab von der angestrebten PUR-Werkstoffdichte und der eingesetzten Wassermenge. Die erforderlichen Mengen können experimentell leicht ermittelt werden. Zufriedenstellende Ergebnisse liefern üblicherweise Feststoffmengen von 0,5 bis 35 Gew.-Teilen, vorzugsweise 2 bis 15 Gew.-Teilen, Flüssigkeitsmengen von 1 bis 30 Gew.-Teilen, vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten 1 und 2 Die Gasbeladung mit z. B. Luft, Kohlendioxid, Stickstoff und/oder Helium kann entweder über die Formulierungskomponenten 1, 4 und 5 oder über die Polyisocyanate 2 bzw. über 1, 4, 5 einerseits und 2 andererseits erfolgen.

Als Komponente 4 können dem Fachmann geläufige Aminkatalysatoren eingesetzt werden, z.B. tertiäre Amine wie Triethylamin, Tributylamin, N-Methyl-morpholin, N-Ethyl-morpholin, N,N,N',N'-Tetramethyl-ethylendiamin, Pentamethyl-diethylen-triamin und höhere Homologe (DE-OS 26 24 527 und 26 24 528), 1,4-Diaza-bicyclo-(2,2,2)-octan, N-Methyl-N'-dimethylaminoethylpiperazin, Bis-(dimethylaminoalkyl)-piperazine (DE-A 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, 1,2-Dimethylimidazol, 2-Methylimidazol, monocyclische und bicyclische Amidine (DE-A 17 20 633), Bis-(dialkylamino)-alkylether (US-A 3 330 782, DE-B 10 30 558, DE-A 18 04 361 und 26 18 280) sowie Amidgruppen (vorzugsweise Formamidgruppen) aufweisende tertiäre Amine gemäß DE-A 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol oder alkylsubstituierten Phenolen, in Frage. Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren können ferner Silaamine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet.

Werden für die Katalyse der Polyurethanreaktion Amine als Katalysatoren eingesetzt, so ist natürlich zu beachten, dass erfindungsgemäß unter Amin-Katalyse hergestellte Polyoxyalkylenpolyol-Mischungen bereits gegebenenfalls katalytisch aktive Amine enthalten. Durch geeignete Versuchsreihen ist es dem Fachmann jedoch leicht möglich, die Mengen gegebenenfalls noch zuzusetzender Aminkatalysatoren zu ermitteln.

Des Weiteren können als Katalysatoren für diesen Zweck übliche organische Metallverbindungen eingesetzt werden, vorzugsweise organische Zinnverbindungen wie Zinn-(II)-Salze von organischen Carbonsäuren, z. B. Zinn-(II)-acetat, Zinn-(II)-octoat, Zinn-(II)-ethylhexoat und Zinn-(II)-Taurat und, weniger bevorzugt, die Dialkylzinn-(IV)-salze von Mineralsäuren oder organischen Carbonsäuren, z. B. Dibutylzinndiacetat, Dibutylzinndilaurat, Dibutylzinnmaleat, Dioctylzinndiacetat und Dibutylzinndichlorid. Daneben können auch schwefelhaltige Verbindungen wie Di-n-octyl-zinn-mercaptid (US-A 3 645 927) Verwendung finden.

Katalysatoren, welche die Trimerisierung von NCO-Gruppen in besonderer Weise katalysieren, werden zur Herstellung von Polyurethanwerkstoffen mit hohen Anteilen an so genannten Poly(isocyanurat)strukturen ("PIR-Schaumstoffe") eingesetzt. Üblicherweise kommen für die Herstellung solcher Materialien Rezepturen mit signifikanten Überschüssen von NCO-Gruppen gegenüber OH-Gruppen zur Anwendung. PIR-Schaumstoffe werden üblicherweise bei Kennzahlen von 180 bis 450 hergestellt, wobei die Kennzahl als das mit dem Faktor 100 multiplizierte Verhältnis von Isocyanatgruppen zu Hydroxygruppen definiert ist. Katalysatoren, die zur Ausprägung von Isocyanuratstrukturen beitragen, sind Metallsalze wie beispielsweise Kalium-oder Natriumacetat, Natriumoctoat und Aminoverbindungen wie 1,3,5-Tris(3-dimethylaminopropyl)hexahydrotriazin.

Die Katalysatoren bzw. Katalysatorkombinationen werden in der Regel in einer Menge zwischen etwa 0,001 und 10 Gew.-%, insbesondere 0,01 bis 4 Gew.-% bezogen auf die Gesamtmenge an Verbindungen mit mindestens zwei gegenüber Isocyanaten reaktionsfähigen Wasserstoffatomen eingesetzt.

In Abwesenheit von Feuchtigkeit und physikalisch oder chemisch wirkenden Treibmitteln können auch kompakte PUR-Werkstoffe hergestellt werden.

Bei der Herstellung der kompakten oder geschäumten PUR-Werkstoffe können gegebenfalls Zusatzstoffe 5 mitverwendet werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane, in Frage. Diese Verbindungen sind im Allgemeinen so aufgebaut, dass Copolymerisate aus Ethylenoxid und Propylenoxid mit einem Polydimethylsiloxanrest verbunden sind. Derartige Schaumstabilisatoren können gegenüber Isocyanaten reaktiv sein oder durch Veretherung der endständigen OH-Gruppen gegenüber Isocyanaten unreaktiv sein. Sie sind z.B. in US-A 2 834 748, 2 917 480 und 3 629 308 beschrieben. Allgemeine Strukturen solcher Schaumstabilisatoren sind in G. Oertel (Hrsg.): "Kunststoff-Handbuch", Band VII, Carl-Hanser-Verlag, München, Wien 1993, S. 113 - 115 wiedergegeben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole und Paraffinöle, und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente 1 angewandt. Zugesetzt werden können auch Reaktionsverzögerer z.B. sauer reagierende Stoffe wie Salzsäure, oder organische Säuren und Säurehalogenide, sowie Pigmente oder Farbstoffe und an sich bekannte Flammschutzmittel, z.B. Tris-(chlorethyl)phosphat, Trikresylphosphat oder Ammoniumphosphat und - polyphosphat, ferner Stabilisatoren gegen Alterungs- und Witterungseinflüsse, Weichmacher und fungizid und bakterizid wirkende Substanzen. Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S. 103-113 beschrieben.

Zur Herstellung der PUR- bzw. PIR-Werkstoffe kann das Mengenverhältnis der Isocyanatgruppen in den Polyisocyanaten 2. zu den gegenüber den Isocyanaten reaktiven Wasserstoffen in den Komponenten 1, 3, 4 und 5 stark variiert werden. Üblich sind Verhältnisse von 0,7:1 bis 5:1.

Die PUR-, bzw. PIR-Werkstoffe können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden. Die nach dem erfindungsgemäßen Verfahren besonders vorteilhaft herstellbaren hochfunktionellen Polyoxyalkylenpolyol_Mischungen können mit Polyisocyanaten und ggf. zu verwendenden physikalischen Treibmitteln unter Einsatz der üblichen Hochdruck- bzw. Niederdruckverarbeitungsmaschinen insbesondere zu harten Polyurethanisolierschaumstoffen, die beispielsweise bei der Dämmung von Kältegeräten oder Gebäuden Einsatz finden, verarbeitet werden. Die erfindungsgemäßen Polyoxyalkylenpolyol-Mischungen können hierbei dem maschinellen Mischaggregat entweder als Einzelkomponente oder als Bestandteil einer vorab hergestellten Formulierung zugeführt werden. Als besonders vorteilhaft für die maschinelle Verarbeitung der erfindungsgemäßen Polyoxyalkylenpolyol-Mischungen erweist sich hierbei ihre niedrige Viskosität.

In einer ersten Ausführung die Erfindung ein Verfahren zur Herstellung einer Polyoxyalkylenpolyol - Mischung umfassend mindestens 3 Polyoxyalkylenpolyole (a) (b) und (c),
wobei die mittlere OH-Zahl der Polyoxyalkylenpolyol-Mischung 290 - 560 mg KOH / g beträgt und die OH-Zahl gemäß der Vorschrift der DIN 53240 bestimmt worden ist;
wobei die berechnete mittlere OH-Zahl der Polyoxyalkylenpolyole (b) und (c) mindestens 360 mg KOH / g beträgt und die Polyoxyalkylenpolyol - Mischung durch Umsetzung eines Gemisches, umfassend mindestens ein Polyoxyalkylenpolyol (a), mindestens eine H-funktionelle Startersubstanz (b') und mindestens eine H-funktionelle Startersubstanz (c') mit einer OH-reaktiven Verbindung optional in Gegenwart eines Katalysators erhalten wird,
wobei das Verfahren folgende Schritte umfasst
i) Bereitstellen einer Mischung (i) umfassend das Polyoxyalkylenpolyol (a), die H-funktionelle Startersubstanz (b'), sowie die H-funktionelle Startersubstanz (c');
ii) Umsetzen der Mischung (i) mit der OH-reaktiven Verbindung optional in Gegenwart des Katalysators;
wobei das Polyoxyalkylenpolyol (a) eine Funktionalität F(a) von 2 bis 3 und eine berechnete OH-Zahl von 60 bis 168 mg KOH / g aufweist;
wobei die H-funktionelle Startersubstanz (b') eine Funktionalität F(b') von 3 bis 8 und eine berechnete molare Masse von mindestens 60 g/mol aufweist;
wobei die H-funktionellen Startersubstanz (c') eine Funktionalität F(c') von 3 bis 8 und eine berechnete molare Masse von mindestens 60 g/mol aufweist;
wobei die H-funktionelle Startersubstanz (b') von der H-funktionellen Startersubstanz (c') verschieden ist;
wobei die Schmelztemperatur der H-funktionellen Startersubstanz (b') und/oder der H-funktionellen Startersubstanz (c') kleiner als 150 °C ist und die berechnete zahlenmittlere Funktionalität der Mischung der H-funktionellen Startersubstanzen (b') und (c') mindestens 4,5 beträgt,
und wobei die Differenz zwischen der berechneten mittleren OH-Zahl der Polyoxyalkylenpolyole (b) und (c) und der OH-Zahl des Polyoxyalkylenpolyols (a) zwischen 295 und 405 mg KOH / g beträgt.

In einer zweiten Ausführungsform betrifft die Erfindung ein Verfahren gemäß der ersten Ausführungsform, wobei das Umsetzen der Mischung (i) mit der OH-reaktiven Verbindung in Schritt (ii) in Gegenwart des Katalysators erfolgt.

In einer dritten Ausführungsform betrifft die Erfindung ein Verfahren gemäß der ersten oder zweiten Ausführungsform wobei der Katalysator ein basischer, ein Brönstedt-saurer, ein Lewis-saurer und/oder ein Doppelmetallcyanidkatalysator, bevorzugt ein basischer Katalysator ist.

In einer vierten Ausführungsform betrifft die Erfindung ein Verfahren gemäß der dritten Ausführungsform, wobei der der Katalysator ein basischer Katalystor ist und der basische Katalysator ein Alkalihydroxid, Erdalkalihydroxid und/oder Amin ist.

In einer fünften Ausführungsform betrifft die Erfindung ein Verfahren gemäß der vierten Ausführungsform, wobei der basische Katalysator ein Amin ist.

In einer sechsten Ausführungsform betrifft die Erfindung ein Verfahren gemäß einer der ersten bis fünften Ausführungsform, wobei der Massenanteil des mindestens einen Polyoxyalkylenpolyols (a) 2 bis 30 Gew.-%, bevorzugt 5 bis 30 Gew.-%, bezogen auf die Masse der Polyoxyalkylenpolyol - Mischung, beträgt.

In einer siebten Ausführungsform betrifft die Erfindung ein Verfahren gemäß einer der ersten bis sechsten Ausführungsform, wobei die Startersubstanz (b') eine Funktionalität von 3 bis 8 und die Startersubstanz (c') eine Funktionalität von 6 bis 8 besitzt.

In einer achten Ausführungsform betrifft die Erfindung ein Verfahren einer der ersten bis siebten Ausführungsform, wobei mindestens eine der Startersubstanzen (b') oder (c') einen Schmelzpunkt von größer 150 °C und eine der Startersubstanzen (b') oder (c') einen Schmelzpunkt von kleiner 150 °C aufweist, wobei die Schmelzpunkte mittels ASTM E324 (11/2016) bestimmt wurden.

In einer neunten Ausführungsform betrifft die Erfindung ein Verfahren gemäß einer der ersten bis achten Ausführungsform, wobei der Massenanteil der H-funktionellen Startersubstanz (b') bezogen auf die Gesamtmasse der H-funktionellen Startersubstanz (b') und der H-funktionellen Startersubstanz (c') 15 Gew.-% bis 40 Gew.-% beträgt.

In einer zehnten Ausführungsform betrifft die Erfindung ein Verfahren gemäß einer der ersten bis neunten Ausführungsform, wobei die OH-reaktive Verbindung ein Alkylenoxid und/oder ein Fettsäureester, bevorzugt ein Alkylenoxid ist.

In einer elften Ausführungsform betrifft die Erfindung ein Verfahren gemäß der zehnten Ausführungsform, wobei die OH-reaktive Verbindung ein Alkylenoxid ist.

In einer zwölften Ausführungsform betrifft die Erfindung ein Verfahren gemäß der elften Ausführungsform, wobei das Alkylenoxid Propylenoxid und/oder Ethylenoxid bevorzugt Propylenoxid ist.

In einer dreizehnten Ausführungsform betrifft die Erfindung ein Polyoxyalkylenpolyol - Mischung erhältlich nach einer der ersten bis zwölften Ausführungsform.

In einer vierzehnten Ausführungsform betrifft die Erfindung ein Polyoxyalkylenpolyol - Mischung gemäß der dreizehnten Ausführungsform mit einer Viskosität von 5000-60000 mPas bei 25°C bestimmt mittels Rotationsviskosimeter nach der Vorschrift der DIN 53018.

In einer fünfzehnten Ausführungsform betrifft die Erfindung ein Verfahren zur Herstellung von Polyurethanen durch Umsetzung der Polyoxyalkylenpolyol - Mischung gemäß der dreizehnten oder vierzehnten Ausführungsform mit einem Polyisocyanat.

### Beispiele

### Abkürzungen:

OHZ = OH-Zahl (Hydroxylzahl)

### Methoden:

Die Bestimmung der OH-Zahlen erfolgte gemäß der Vorschrift der DIN 53240. Alle berechneten OH-Zahlen beziehen sich auf die salzfreien Alkylenoxidaddukte.

Die Viskositäten wurden mittels Rotationsviskosimeter (Physica MCR 51, Hersteller: Anton Paar) nach der Vorschrift der DIN 53018 ermittelt.

Die Molmassenverteilung wurde mittels Größenausschlusschromatographie (SEC) ermittelt. Verwendet wurde das Gerät Agilent 1100 Series der Fa. Agilent. Angegeben wird die Polydispersität (PD) für die Molekulargewichtsverteilung M_{w}/Mₙ, wobei M_{w} für die gewichtsgemittelte Molmasse und Mₙ für die zahlengemittelte Molmasse stehen. Weitere Angaben:
- Säulenkombination: 1 Vorsäule PSS, 5 µl, 8x50mm; 2 PSS SVD, 5 µl, 100 A°, 8x300mm; 2 PSS SVD, 5 µl, 1000 A°, 8x300mm, PSS ist der Hersteller der Säulen (Polymer Standard Solutions, Mainz)
- Auswertesoftware: WIN GPC der Fa. PSS
- Lösungsmittel: THF (Merck LiChrosolv)
- Flussrate: 1 ml / min
- Detektortyp: RI-Detektor (Brechungsindex), Shodex RI 74
- Verwendete Kalibrationsstandards: Kalibrierstandard der Fa PSS auf Basis Polystyrol.

Die Versuchsergebnisse sind in Tabelle 1 zusammengestellt.

### Beispiel 1, erfinderisch:

In einen 2 1 Laborautoklaven wurden unter Stickstoffatmosphäre 375 g eines propylenglykolgestarteten Propylenoxidadduktes (Polyoxyalkylenpolyol (a)) mit einer OHZ von 112 mg KOH und 168,8 g einer 70-%igen Lösung von Sorbit (Startersubstanz (b')) in Wasser gegeben. Nach Zugabe von 5,046 g einer Lösung (44,89 Gew.-%) von KOH in Wasser und 219,8 g Saccharose (Startersubstanz (c')) wurde der Autoklav verschlossen, die Temperatur wurde unter Rühren (Kreuzbalkenrührer, 100 U/min) auf 110 °C erhöht und der Druck wurde auf ca. 80 mbar abgesenkt. Nach 15 min. wurde bei weiter laufender Vakuumpumpe begonnen 50 ml Stickstoff pro Minute über einen unter dem Flüssigkeitsspiegel liegenden Verteilerring einzuleiten. Diese Stickstoffeinleitung ("Strippen") wurde über einen Zeitraum von 3 Stunden aufrechterhalten. Danach wurde die Rührerdrehzahl auf 800 U/min erhöht und bei 110 °C mit der Dosierung von insgesamt 787,2 g Propylenoxid in den Kopfraum des Reaktors begonnen. Die Propylenoxiddosierphase dauerte 9,5 h, die Dosierrate wurde sukzessive von 25 g / h auf den Endwert von 115 g / h gesteigert und die Temperatur wurde während der Propylenoxiddosierung auf 120 °C angehoben. Nach einer Nachreaktionsphase von 4,8 h Dauer wurde der Inhalt des Autoklaven auf 80 °C abgekühlt und es wurden 5,154 g einer 85 gew.-%igen Lösung von Milchsäure in Wasser zugegeben. Nach Zugabe von 0,760 g IRGANOX® 1076 wurde zunächst 30 min. bei 80 °C nachgerührt, danach bei 80 °C und 70 mbar über einen Zeitraum von 3 h entwässert. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 350 mg KOH / g und einer Viskosität (25 °C) von 10200 mPas. Die Differenz zwischen der mittleren OH-Zahl der Alkylenoxidaddukte der H-funktionellen Startersubstanzen (b') und (c') und der OH-Zahl des Polyoxyalkylenpolyols (a) betrug 338 mg KOH / g.

### Beispiel 2, erfinderisch

In einen 2 1 Laborautoklaven wurden unter Stickstoffatmosphäre 41,8 g Dipropylenglykol und 1,684 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Druck wurde sodann auf 100 mbar gesenkt und der Inhalt des Autoklaven wurde unter Rühren (Kreuzbalkenrührer, 800 U/min) auf 150 °C erwärmt. Nach Erreichen dieser Temperatur wurden über einen Zeitraum von 3,33 h 332,2 g Propylenoxid mit einer konstanten Dosierrate in den Kopfraum des Reaktors dosiert. Nach einer Nachreaktionsphase von 2,5 h Dauer wurde auf Raumtemperatur abgekühlt. Das erhaltene Diol (Polyoxyalkylenpolyol (a)) hat eine rechnerische OH-Zahl von 112,6 mg KOH / g. Es wurden sodann unter Stickstoff 169,1 g einer 70-%igen Lösung von Sorbit (Startersubstanz (b')) in Wasser, 3,339 g einer Lösung (44,89 Gew.-%) von KOH in Wasser und 219,6 g Saccharose (Startersubstanz (c')) in den Reaktor gegeben. Der Autoklav wurde verschlossen, die Temperatur wurde unter Rühren (100 U/min) auf 110 °C erhöht und der Druck wurde auf ca. 80 mbar abgesenkt. Nach 15 min. wurde bei weiter laufender Vakuumpumpe begonnen 50 ml Stickstoff pro Minute über einen unter dem Flüssigkeitsspiegel liegenden Verteilerring einzuleiten. Diese Stickstoffeinleitung ("Strippen") wurde über einen Zeitraum von 3 Stunden aufrechterhalten. Danach wurde die Rührerdrehzahl auf 800 U/min erhöht und bei 110 °C mit der Dosierung von insgesamt 787,2 g Propylenoxid in den Kopfraum des Reaktors begonnen. Die Propylenoxiddosierphase dauerte 9,5 h, die Dosierrate wurde sukzessive von 25 g / h auf den Endwert von 115 g / h gesteigert und die Temperatur wurde während der Propylenoxiddosierung auf 120 °C angehoben. Nach einer Nachreaktionsphase von 3,68 h Dauer wurde der Inhalt des Autoklaven auf 80 °C abgekühlt und es wurden 5,133 g einer 85 gew.-%igen Lösung von Milchsäure in Wasser zugegeben. Nach Zugabe von 0,755 g IRGANOX® 1076 wurde zunächst 30 min. bei 80 °C nachgerührt, danach bei 80 °C und 70 mbar über einen Zeitraum von 3 h entwässert. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 342 mg KOH / g und einer Viskosität (25 °C) von 10300 mPas. Die Differenz zwischen der mittleren OH-Zahl der Alkylenoxidaddukte der H-funktionellen Startersubstanzen (b') und (c') und der OH-Zahl des Polyoxyalkylenpolyols (a) betrug 338 mg KOH / g.

### Beispiel 3, erfinderisch

In einen 2 1 Laborautoklaven wurden unter Stickstoffatmosphäre 40,2 g Dipropylenglykol und 0,823 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,63 bar (absolut) wurden über einen Zeitraum von 7,65 h 329,4 g Propylenoxid in den Kopfraum des Reaktors dosiert. Nach einer Nachreaktionsphase von 8 h Dauer wurde das erhaltene Zwischenprodukt, ein Diol mit einer rechnerischen OH-Zahl von 100 mg KOH / g (Polyoxyalkylenpolyol (a)), bei 110 °C über einen Zeitraum von 0,51 h bei einem Druck von 15 mbar ausgeheizt und danach auf 50 °C abgekühlt. Es wurden sodann unter Stickstoff 169,8 g einer 70-%igen Lösung von Sorbit in Wasser (Startersubstanz (b')), 223,1 g Saccharose (Startersubstanz (c')) und 4,199 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 30 mbar abgesenkt. Nach 3 h Entwässerungszeit wurde die Vakuumleitung geschlossen und die Rührerdrehzahl auf 800 U/min erhöht. Bei 110 °C wurde mit der Dosierung von insgesamt 788,5 g Propylenoxid in den Kopfraum des Reaktors begonnen. Die Propylenoxiddosierphase dauerte 9,6 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 3,1 h Dauer wurde der Inhalt des Autoklaven bei 120 °C über einen Zeitraum von 1,3 h im Vakuum (40 mbar) ausgeheizt. Nach Abkühlen auf 80 °C wurden 10,8 g einer 85 gew.-%igen Lösung von Milchsäure in Wasser zugegeben. Nach Zugabe von 0,753 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 368 mg KOH / g und einer Viskosität (25 °C) von 19250 mPas. Die Differenz zwischen der mittleren OH-Zahl der Alkylenoxidaddukte der H-funktionellen Startersubstanzen (b') und (c') und der OH-Zahl des Polyoxyalkylenpolyols (a) betrug 353 mg KOH / g.

### Beispiel 4, erfinderisch

In einen 2 1 Laborautoklaven wurden unter Stickstoffatmosphäre 53,4 g Dipropylenglykol und 1,649 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,67 bar (absolut) wurden über einen Zeitraum von 6,32 h 315,5 g Propylenoxid in den Kopfraum des Reaktors dosiert. Nach einer Nachreaktionsphase von 5 h Dauer wurde das erhaltene Zwischenprodukt, ein Diol mit einer rechnerischen OH-Zahl von 140 mg KOH / g (Polyoxyalkylenpolyol (a)), bei 130 °C über einen Zeitraum von 1,3 h bei einem Druck von 40 mbar ausgeheizt und danach auf Raumtemperatur abgekühlt. Es wurden sodann unter Stickstoff 164,6 g einer 70-%igen Lösung von Sorbit in Wasser (Startersubstanz (b')), 216,5 g Saccharose (Startersubstanz (c')) und 3,354 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 30 mbar abgesenkt. Nach 3,1 h Entwässerungszeit wurde die Vakuumleitung geschlossen und die Rührerdrehzahl auf 800 U/min erhöht. Bei 110 °C wurde mit der Dosierung von insgesamt 798,4 g Propylenoxid in den Kopfraum des Reaktors begonnen. Die Propylenoxiddosierphase dauerte 9,62 h, die Dosierrate wurde sukzessive von 24 g / h auf den Endwert von 120 g / h gesteigert und die Temperatur wurde während der Propylenoxiddosierung auf 120 °C angehoben. Nach einer Nachreaktionsphase von 5,1 h Dauer wurde der Inhalt des Autoklaven bei 120 °C über einen Zeitraum von 0,62 h im Vakuum (58 mbar) ausgeheizt. Nach Abkühlen auf 80 °C wurden 4,821 g einer 85 gew.-%igen Lösung von Milchsäure in Wasser zugegeben. Nach Zugabe von 0,753 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 377 mg KOH / g und einer Viskosität (25 °C) von 12100 mPas. Die Differenz zwischen der mittleren OH-Zahl der Alkylenoxidaddukte der H-funktionellen Startersubstanzen (b') und (c') und der OH-Zahl des Polyoxyalkylenpolyols (a) betrug 300 mg KOH / g.

### Beispiel 5, erfinderisch

In einen 2 1 Laborautoklaven wurden unter Stickstoffatmosphäre 41,0 g Dipropylenglykol und 1,900 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,66 bar (absolut) wurden über einen Zeitraum von 6,50 h 329,4 g Propylenoxid in den Kopfraum des Reaktors dosiert. Nach einer Nachreaktionsphase von 4,5 h Dauer wurde das erhaltene Zwischenprodukt, ein Diol mit einer rechnerischen OH-Zahl von 114,4 mg KOH / g (Polyoxyalkylenpolyol (a)), bei 130 °C über einen Zeitraum von 0,5 h bei einem Druck von 26 mbar ausgeheizt und danach auf 40 °C abgekühlt. Es wurden sodann unter Stickstoff 185,3 g einer 70-%igen Lösung von Sorbit in Wasser (Startersubstanz (b')), 243,5 g Saccharose (Startersubstanz (c')) und 3,129 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 21 mbar abgesenkt. Nach 3,25 h Entwässerungszeit wurde die Vakuumleitung geschlossen und die Rührerdrehzahl auf 800 U/min erhöht. Bei 110 °C wurde mit der Dosierung von insgesamt 756,4 g Propylenoxid in den Kopfraum des Reaktors begonnen. Die Propylenoxiddosierphase dauerte 9,3 h, die Dosierrate wurde sukzessive von 24 g / h auf den Endwert von 120 g / h gesteigert und die Temperatur wurde während der Propylenoxiddosierung auf 120 °C angehoben. Nach einer Nachreaktionsphase von 5,2 h Dauer wurde der Inhalt des Autoklaven bei 120 °C über einen Zeitraum von 1,0 h im Vakuum (43 mbar) ausgeheizt. Nach Abkühlen auf 80 °C wurden 5,201 g einer 85 gew.-%igen Lösung von Milchsäure in Wasser zugegeben. Nach Zugabe von 0,750 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 404 mg KOH / g und einer Viskosität (25 °C) von 28700 mPas. Die Differenz zwischen der mittleren OH-Zahl der Alkylenoxidaddukte der H-funktionellen Startersubstanzen (b') und (c') und der OH-Zahl des Polyoxyalkylenpolyols (a) betrug 380 mg KOH / g.

### Beispiel 6, erfinderisch

In einen 2 1 Laborautoklaven wurden unter Stickstoffatmosphäre 186,3 g eines propylenglykolgestarteten Propylenoxidadduktes mit einer OHZ von 112 mg KOH / g (Polyoxyalkylenpolyol (a)) und 195,0 g einer 70-%igen Lösung von Sorbit in Wasser (Startersubstanz (b')) gegeben. Nach Zugabe von 4,983 g einer Lösung (44,89 Gew.-%) von KOH in Wasser und 253,5 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U/min) auf 110 °C erwärmt und der Druck wurde auf ca. 30 mbar abgesenkt. Nach 3,5 h Entwässerungszeit wurde die Vakuumleitung geschlossen und die Rührerdrehzahl auf 800 U/min erhöht. Bei 110 °C wurde mit der Dosierung von insgesamt 927,9 g Propylenoxid in den Kopfraum des Reaktors begonnen. Die Propylenoxiddosierphase dauerte 10,7 h, die Dosierrate wurde sukzessive von 25 g / h auf den Endwert von 115 g / h gesteigert und die Temperatur wurde während der Propylenoxiddosierung auf 120 °C angehoben. Nach einer Nachreaktionsphase von 2,8 h Dauer wurde der Inhalt des Autoklaven bei 120 °C über einen Zeitraum von 1,0 h im Vakuum (57 mbar) ausgeheizt. Nach Abkühlen auf 80 °C wurden 4,579 g einer 85 gew.-%igen Lösung von Milchsäure in Wasser zugegeben. Nach Zugabe von 0,780 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 415 mg KOH / g und einer Viskosität (25 °C) von 37900 mPas. Die Differenz zwischen der mittleren OH-Zahl des Alkylenoxidadduktes der H-funktionellen Startersubstanzen (b') und (c') und der OH-Zahl des Polyoxyalkylenpolyols (a) betrug 332 mg KOH / g.

### Beispiel 7, erfinderisch

In einen 2 1 Laborautoklaven wurden unter Stickstoffatmosphäre 44,4 g Dipropylenglykol und 1,735 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,76 bar (absolut) wurden über einen Zeitraum von 6,50 h 323,9 g Propylenoxid in den Kopfraum des Reaktors dosiert. Nach einer Nachreaktionsphase von 3,9 h Dauer wurde das erhaltene Zwischenprodukt, ein Diol mit einer rechnerischen OH-Zahl von 120,8 mg KOH / g (Polyoxyalkylenpolyol (a)), bei 130 °C über einen Zeitraum von 0,5 h bei einem Druck von 38 mbar ausgeheizt und danach auf 40 °C abgekühlt. Es wurden sodann unter Stickstoff 80 g Glycerin (Startersubstanz (b')), 315,1 g Saccharose (Startersubstanz (c')) und 3,390 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 30 mbar abgesenkt. Nach 3,25 h Entwässerungszeit wurde die Vakuumleitung geschlossen und die Rührerdrehzahl auf 800 U/min erhöht. Bei 110 °C wurde mit der Dosierung von insgesamt 736,1 g Propylenoxid in den Kopfraum des Reaktors begonnen. Die Propylenoxiddosierphase dauerte 9,1 h, die Dosierrate wurde sukzessive von 24 g / h auf den Endwert von 120 g / h gesteigert und die Temperatur wurde während der Propylenoxiddosierung auf 120 °C angehoben. Nach einer Nachreaktionsphase von 5,0 h Dauer wurde der Inhalt des Autoklaven bei 120 °C über einen Zeitraum von 1,0 h im Vakuum (28 mbar) ausgeheizt. Nach Abkühlen auf 80 °C wurden 4,952 g einer 85 gew.-%igen Lösung von Milchsäure in Wasser zugegeben. Nach Zugabe von 0,750 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 405 mg KOH / g und einer Viskosität (25 °C) von 12950 mPas. Die Differenz zwischen der mittleren OH-Zahl des Alkylenoxidadduktes der H-funktionellen Startersubstanzen (b') und (c') und der OH-Zahl des Polyoxyalkylenpolyols (a) betrug 374 mg KOH / g.

### Beispiel 8, erfinderisch

In einen 2 1 Laborautoklaven wurden unter Stickstoffatmosphäre 44,3 g Dipropylenglykol und 1,755 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,74 bar (absolut) wurden über einen Zeitraum von 6,30 h 323,8 g Propylenoxid in den Kopfraum des Reaktors dosiert. Nach einer Nachreaktionsphase von 5,0 h Dauer wurde das erhaltene Zwischenprodukt, ein Diol mit einer rechnerischen OH-Zahl von 120,9 mg KOH / g (Polyoxyalkylenpolyol (a)), bei 130 °C über einen Zeitraum von 1,2 h bei einem Druck von 39 mbar ausgeheizt und danach auf 40 °C abgekühlt. Es wurden sodann unter Stickstoff 100 g Glycerin (Startersubstanz (b')), 286,6 g Saccharose (Startersubstanz (c')) und 3,349 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 30 mbar abgesenkt. Nach 3,6 h Entwässerungszeit wurde die Vakuumleitung geschlossen und die Rührerdrehzahl auf 800 U/min erhöht. Bei 110 °C wurde mit der Dosierung von insgesamt 743,5 g Propylenoxid in den Kopfraum des Reaktors begonnen. Die Propylenoxiddosierphase dauerte 9,1 h, die Dosierrate wurde sukzessive von 24 g / h auf den Endwert von 120 g / h gesteigert und die Temperatur wurde während der Propylenoxiddosierung auf 120 °C angehoben. Nach einer Nachreaktionsphase von 4,8 h Dauer wurde der Inhalt des Autoklaven bei 120 °C über einen Zeitraum von 1,0 h im Vakuum (18 mbar) ausgeheizt. Nach Abkühlen auf 80 °C wurden 4,994 g einer 85 gew.-%igen Lösung von Milchsäure in Wasser zugegeben. Nach Zugabe von 0,758 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 413 mg KOH / g und einer Viskosität (25 °C) von 8915 mPas. Die Differenz zwischen der mittleren OH-Zahl des Alkylenoxidadduktes der H-funktionellen Startersubstanzen (b') und (c') und der OH-Zahl des Polyoxyalkylenpolyols (a)) betrug 374 mg KOH / g.

### Beispiel 9, erfinderisch

In einen 2 1 Laborautoklaven wurden unter Stickstoffatmosphäre 184,6 g eines propylenglykolgestarteten Propylenoxidadduktes mit einer OHZ von 112 mg KOH / g (Polyoxyalkylenpolyol (a)) und 93,5 g Glycerin (Startersubstanz (b')) gegeben. Nach Zugabe von 5,03 g einer Lösung (44,89 Gew.-%) von KOH in Wasser und 366,8 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U/min) auf 110 °C erwärmt und der Druck wurde auf ca. 50 mbar abgesenkt. Nach 3,5 h Entwässerungszeit wurde die Vakuumleitung geschlossen und die Rührerdrehzahl auf 800 U/min erhöht. Bei 110 °C wurde mit der Dosierung von insgesamt 855,6 g Propylenoxid in den Kopfraum des Reaktors begonnen. Die Propylenoxiddosierphase dauerte 10,0 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 3,3 h Dauer wurde der Inhalt des Autoklaven bei 120 °C über einen Zeitraum von 0,75 h im Vakuum (67 mbar) ausgeheizt. Nach Abkühlen auf 80 °C wurden 5,270 g einer 85 gew.-%igen Lösung von Milchsäure in Wasser zugegeben. Nach Zugabe von 0,761 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 443 mg KOH / g und einer Viskosität (25 °C) von 25850 mPas. Die Differenz zwischen der mittleren OH-Zahl des Alkylenoxidadduktes der H-funktionellen Startersubstanzen (b') und (c') und der OH-Zahl des Polyoxyalkylenpolyols (a) betrug 383 mg KOH / g.

### Beispiel 10, erfinderisch

In einen 2 1 Laborautoklaven wurden unter Stickstoffatmosphäre 185,0 g eines propylenglykolgestarteten Propylenoxidadduktes mit einer OHZ von 112 mg KOH / g (Polyoxyalkylenpolyol (a)) und 96,7 g Glycerin (Startersubstanz (b')) gegeben. Nach Zugabe von 5,046 g einer Lösung (44,89 Gew.-%) von KOH in Wasser und 379,5 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U/min) auf 110 °C erwärmt und der Druck wurde auf ca. 20 mbar abgesenkt. Nach 3,0 h Entwässerungszeit wurde die Vakuumleitung geschlossen und die Rührerdrehzahl auf 800 U/min erhöht. Bei 110 °C wurde mit der Dosierung von insgesamt 839,8 g Propylenoxid in den Kopfraum des Reaktors begonnen. Die Propylenoxiddosierphase dauerte 10,0 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 3,6 h Dauer wurde der Inhalt des Autoklaven bei 120 °C über einen Zeitraum von 1,1 h im Vakuum (23 mbar) ausgeheizt. Nach Abkühlen auf 80 °C wurden 5,163 g einer 85 gew.-%igen Lösung von Milchsäure in Wasser zugegeben. Nach Zugabe von 0,763 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 457 mg KOH / g und einer Viskosität (25 °C) von 31900 mPas. Die Differenz zwischen der mittleren OH-Zahl des Alkylenoxidadduktes der H-funktionellen Startersubstanzen (b') und (c') und der OH-Zahl des Polyoxyalkylenpolyols (a) betrug 400 mg KOH / g.

### Beispiel 11, erfinderisch

In einen 2 1 Laborautoklaven wurden unter Stickstoffatmosphäre 53,5 g Dipropylenglykol und 1,700 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,61 bar (absolut) wurden über einen Zeitraum von 6,30 h 315,5 g Propylenoxid in den Kopfraum des Reaktors dosiert. Nach einer Nachreaktionsphase von 4,5 h Dauer wurde das erhaltene Zwischenprodukt, ein Diol mit einer rechnerischen OH-Zahl von 141 mg KOH / g (Polyoxyalkylenpolyol (a)), bei 130 °C über einen Zeitraum von 0,5 h bei einem Druck von 27 mbar ausgeheizt und danach auf ca 40 °C abgekühlt. Es wurden sodann unter Stickstoff 182,0 g einer 70-%igen Lösung von Sorbit in Wasser (Startersubstanz (b')), 239,0 g Saccharose (Startersubstanz (c')) und 3,340 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 15 mbar abgesenkt. Nach 5,25 h Entwässerungszeit wurde die Vakuumleitung geschlossen und die Rührerdrehzahl auf 800 U/min erhöht. Bei 110 °C wurde mit der Dosierung von insgesamt 764,3 g Propylenoxid in den Kopfraum des Reaktors begonnen. Die Propylenoxiddosierphase dauerte 7,2 h, die Dosierrate wurde sukzessive von 24 g / h auf den Endwert von 120 g / h gesteigert, die Temperatur betrug während der gesamten Propylenoxiddosierphase 120 °C. Nach einer Nachreaktionsphase von 3,9 h Dauer wurde der Inhalt des Autoklaven bei 120 °C über einen Zeitraum von 0,67 h im Vakuum (53 mbar) ausgeheizt. Nach Abkühlen auf 80 °C wurden 5,188 g einer 85 gew.-%igen Lösung von Milchsäure in Wasser zugegeben. Nach Zugabe von 0,762 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein homogenes, klares Endprodukt mit einer OHZ von 409 mg KOH / g und einer Viskosität (25 °C) von 21750 mPas. Die Differenz zwischen der mittleren OH-Zahl des Alkylenoxidadduktes der H-funktionellen Startersubstanzen (b') und (c') und der OH-Zahl des Polyoxyalkylenpolyols (a) betrug 345 mg KOH / g.

### Beispiel 12, erfinderisch

In einen 2 1 Laborautoklaven wurden unter Stickstoffatmosphäre 188,0 g eines propylenglykolgestarteten Propylenoxidadduktes mit einer OHZ von 112 mg KOH / g (Polyoxyalkylenpolyol (a)) und 94,8 g Glycerin (Startersubstanz (b')) gegeben. Nach Zugabe von 2,25 g N-Methylimidazol und 373,6 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 115 °C erwärmt. Bei 115 °C wurde mit der Dosierung von insgesamt 871,1 g Propylenoxid in den Kopfraum des Reaktors begonnen. Die Propylenoxiddosierphase dauerte 10,0 h, das Propylenoxid wurde dem Autoklaven mit konstanter Dosierrate zugeführt. Nach einer Nachreaktionsphase von 2,0 h Dauer wurde der Inhalt des Autoklaven bei 115 °C über einen Zeitraum von 2,0 h im Vakuum (25 mbar) ausgeheizt. Nach Abkühlen auf 80 °C wurden 0,773 g IRGANOX® 1076 zugegeben und es wurde 30 min. bei 80 °C nachgerührt. Man erhielt ein homogenes, klares Endprodukt mit einer OHZ von 441 mg KOH / g und einer Viskosität (25 °C) von 28300 mPas. Die Differenz zwischen der mittleren OH-Zahl des Alkylenoxidadduktes der H-funktionellen Startersubstanzen (b') und (c') und der OH-Zahl des Polyoxyalkylenpolyols (a) betrug 383 mg KOH / g.

### Beispiel 13, erfinderisch

In einen 2 1 Laborautoklaven wurden unter Stickstoffatmosphäre 185,8 g eines glyceringestarteten Propylenoxidadduktes mit einer OHZ von 116,5 mg KOH / g (Polyoxyalkylenpolyol (a)) und 192,2 g einer 70-%igen Lösung von Sorbit in Wasser (Startersubstanz b') gegeben. Nach Zugabe von 5,00 g einer Lösung (44,89 Gew.-%) von KOH in Wasser und 252,5 g Saccharose (Startersubstanz c') wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U / min) auf 110 °C erwärmt und der Druck wurde auf ca. 33 mbar abgesenkt. Nach 3,3 h Entwässerungszeit wurde die Vakuumleitung geschlossen und die Rührerdrehzahl auf 800 U/min erhöht. Bei 110 °C wurde mit der Dosierung von insgesamt 927,9 g Propylenoxid in den Kopfraum des Reaktors begonnen. Die Propylenoxiddosierphase dauerte 10,7 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 3,7 h Dauer wurde der Inhalt des Autoklaven bei 120 °C über einen Zeitraum von 1,0 h im Vakuum (27 mbar) ausgeheizt. Nach Abkühlen auf 80 °C wurden 5,143 g einer 85 gew.-%igen Lösung von Milchsäure in Wasser zugegeben. Nach Zugabe von 0,787 g IRGANOX® 1076 wurde zunächst 30 min. bei 80 °C nachgerührt. Schließlich wurde das Produkt im Vakuum (25 mbar) über einen Zeitraum von 3 h bei 110 °C ausgeheizt. Man erhielt ein homogenes, klares Endprodukt mit einer OHZ von 402 mg KOH / g und einer Viskosität (25 °C) von 37900 mPas. Die Differenz zwischen der mittleren OH-Zahl des Alkylenoxidadduktes der H-funktionellen Startersubstanzen b' und c' und der OH-Zahl der des Polyoxyalkylenpolyols (a) betrug 324 mg KOH / g.

### Beispiel 14, erfinderisch

In einen 2 1 Laborautoklaven wurden unter Stickstoffatmosphäre 100,3 g eines propylenglykolgestarteten Propylenoxidadduktes mit einer OHZ von 112 mg KOH / g (Polyoxyalkylenpolyol (a)) und 98,0 g Glycerin (Startersubstanz (b')) gegeben. Nach Zugabe von 2,27 g N-Methylimidazol und 385,7 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 115 °C erwärmt. Bei 115 °C wurde mit der Dosierung von insgesamt 916,6 g Propylenoxid in den Kopfraum des Reaktors begonnen. Die Propylenoxiddosierphase dauerte 10,0 h, das Propylenoxid wurde dem Autoklaven mit konstanter Dosierrate zugeführt. Nach einer Nachreaktionsphase von 3,0 h Dauer wurde der Inhalt des Autoklaven bei 115 °C über einen Zeitraum von 1,0 h im Vakuum (20 mbar) ausgeheizt. Nach Abkühlen auf 80 °C wurden 0,751 g IRGANOX® 1076 zugegeben und es wurde 30 min. bei 80 °C nachgerührt. Man erhielt ein homogenes, klares Endprodukt mit einer OHZ von 460 mg KOH / g und einer Viskosität (25 °C) von 39850 mPas. Die Differenz zwischen der mittleren OH-Zahl des Alkylenoxidadduktes der H-funktionellen Startersubstanzen (b') und (c') und der OH-Zahl des Polyoxyalkylenpolyols (a) betrug 377 mg KOH / g.

### Beispiel 15, Vergleich

In einen 2 1 Laborautoklaven wurden unter Stickstoffatmosphäre 29,524 g eines aus 6,721 g Propylenglykol und 21,222 g Propylenoxid unter Katalyse von 2,248 g 100 %iger KOH gefertigten alkalischen Vorpolymerisates gegeben. Nach Zugabe von 26,71 g Propylenglykol wurde der Autoklav und der Druck auf 85 mbar gesenkt. Sein Inhalt wurde unter Rühren (Kreuzbalkenrührer, 800 U/min) auf 110 °C erwärmt und es wurden nach Erreichen dieser Temperatur über einen Zeitraum von 1,02 h 177,4 g Propylenoxid in den Kopfraum des Reaktors dosiert. Nach einer Nachreaktionsphase von 6,0 h Dauer wurde das erhaltene Zwischenprodukt, ein Diol mit einer rechnerischen OHZ von 213 mg KOH / g (Polyoxyalkylenpolyol (a)) auf Raumtemperatur abgekühlt und es wurden unter Stickstoff 477,2 g Saccharose (Startersubstanz (c')) in den Reaktor gegeben. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Nach Aufheizen des Autoklaveninhaltes auf die Reaktionstemperatur von 110 °C und Absenken des Druckes auf 81 mbar wurde begonnen Propylenoxid in den Kopfraum des Reaktors zu dosieren. Beabsichtigt war die Dosierung von insgesamt 789,3 g Propylenoxid. Nachdem innerhalb von 5 h 265 g Propylenoxid zugeführt worden waren und der Druck auf 4,8 bar angestiegen war, wurde der Versuch aufgrund der sehr langsamen Epoxidaufnahme abgebrochen.

### Beispiel 16, Vergleich

In einen 2 1 Laborautoklaven wurden unter Stickstoffatmosphäre 379,5 g eines propylenglykolgestarteten Propylenoxidadduktes mit einer OHZ von 112 mg KOH (Polyoxyalkylenpolyol (a')), 150,1 g destilliertes Wasser (Startersubstanz (b')) und 379,6 g Saccharose (Startersubstanz (c')) gegeben. Nach Zugabe von 4,011 g einer Lösung (44,89 Gew.-%) von KOH in Wasser wurde der Autoklav verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 110 °C erwärmt. Danach wurde bei 110 °C mit der Dosierung von insgesamt 441,0 g Propylenoxid in den Kopfraum des Reaktors begonnen. Die Propylenoxiddosierphase dauerte 6,7 h, die Dosierrate wurde sukzessive von 25 g / h auf den Endwert von 104 g / h gesteigert und die Temperatur wurde während der Propylenoxiddosierung auf 120 °C angehoben. Nach einer Nachreaktionsphase von 2,1 h Dauer wurde der Inhalt des Autoklaven auf 80 °C abgekühlt und sein Inhalt wurde in eine Vierhalskolbenrührapparatur abgelassen. Anschließend wurde bei 80 °C mittels Wasserstrahlpumpe über einen Zeitraum von 3 Stunden entwässert, wobei 119 g Destillat in der Destillatvorlage aufgefangen wurden. Bei 80 °C wurden sodann 4,091 g einer 85 gew.-%igen Lösung von Milchsäure in Wasser zugegeben. Nach Zugabe von 0,533 g IRGANOX® 1076 wurde zunächst 30 min. bei 80 °C nachgerührt, danach bei 80 °C im Wasserstrahlvakuum über einen Zeitraum von 3 h entwässert. Schließlich wurde das Produkt im Ölpumpenvakuum (5 mbar) über einen Zeitraum von 3 h bei 110 °C ausgeheizt. Man erhielt ein zweiphasiges Endprodukt, welches nicht weiter analysiert wurde.

### Beispiel 17, Vergleich

In einen 2 1 Laborautoklaven wurden unter Stickstoffatmosphäre 379,5 g eines propylenglykolgestarteten Propylenoxidadduktes mit einer OHZ von 112 mg KOH (Polyoxyalkylenpolyol (a)), 150,0 g destilliertes Wasser (Startersubstanz (b')) und 379,6 g Saccharose Startersubstanz (c')) gegeben. Nach Zugabe von 4,605 g einer Lösung (44,89 Gew.-%) von KOH in Wasser wurde der Autoklav verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 110 °C erwärmt. Danach wurde bei 110 °C mit der Dosierung von insgesamt 616,5 g Propylenoxid in den Kopfraum des Reaktors begonnen. Die Propylenoxiddosierphase dauerte 8,03 h, die Dosierrate wurde sukzessive von 25 g / h auf den Endwert von 118 g / h gesteigert und die Temperatur wurde während der Propylenoxiddosierung auf 120 °C angehoben. Nach einer Nachreaktionsphase von 3,0 h Dauer wurde der Inhalt des Autoklaven auf 80 °C abgekühlt und sein Inhalt wurde in eine Vierhalskolbenrührapparatur abgelassen. Anschließend wurde bei 80 °C mittels Wasserstrahlpumpe über einen Zeitraum von 3 Stunden entwässert, wobei 112 g Destillat in der Destillatvorlage aufgefangen wurden. Bei 80 °C wurden sodann 4,693 g einer 85 gew.-%igen Lösung von Milchsäure in Wasser zugegeben. Nach Zugabe von 0,59 g IRGANOX® 1076 wurde zunächst 30 min. bei 80 °C nachgerührt, danach bei 80 °C im Wasserstrahlvakuum über einen Zeitraum von 3 h entwässert. Schließlich wurde das Produkt im Ölpumpenvakuum (5 mbar) über einen Zeitraum von 3 h bei 110 °C ausgeheizt. Man erhielt ein zweiphasiges Endprodukt, welches nicht weiter analysiert wurde.

### Beispiel 18, Vergleich

In einen 2 1 Laborautoklaven wurden unter Stickstoffatmosphäre 41,1 g Propylenglykol und 0,949 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Druck wurde sodann auf 56 mbar gesenkt und der Inhalt des Autoklaven wurde unter Rühren (Kreuzbalkenrührer, 800 U/min) auf 150 °C erwärmt. Nach Erreichen dieser Temperatur wurden über einen Zeitraum von 4,38 h 338,4 g Propylenoxid mit einer konstanten Dosierrate in den Kopfraum des Reaktors dosiert. Nach einer Nachreaktionsphase von 9,2 h Dauer wurde das erhaltene Zwischenprodukt, ein Diol mit einer rechnerischen OH-Zahl von 170 mg KOH / g (Polyoxyalkylenpolyol (a)) auf Raumtemperatur abgekühlt und es wurden unter Stickstoff 150,0 g destilliertes Wasser (Startersubstanz (b')), 3,776 g einer Lösung (44,89 Gew.-%) von KOH in Wasser und 379,6 g Saccharose (Startersubstanz (c')) in den Reaktor gegeben. Der Autoklav wurde verschlossen und Luftsauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Es wurde unter Rühren (800 U/min) auf 110 °C aufgeheizt und nach Erreichen dieser Temperatur mit der Dosierung von insgesamt 615,5 g Propylenoxid in den Kopfraum des Reaktors begonnen. Die Propylenoxiddosierphase dauerte 8,05 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 3,0 h Dauer wurde der Inhalt des Autoklaven auf 80 °C abgekühlt und sein Inhalt wurde in eine Vierhalskolbenrührapparatur abgelassen. Anschließend wurde bei 80 °C mittels Wasserstrahlpumpe über einen Zeitraum von 3 Stunden entwässert, wobei 110 g Destillat in der Destillatvorlage aufgefangen wurden. Bei 80 °C wurden sodann 5,025 g einer 85 gew.-%igen Lösung von Milchsäure in Wasser zugegeben. Nach Zugabe von 0,695 g IRGANOX® 1076 wurde zunächst 30 min. bei 80 °C nachgerührt, danach bei 80 °C im Wasserstrahlvakuum über einen Zeitraum von 3 h entwässert. Schließlich wurde das Produkt im Ölpumpenvakuum (5 mbar) über einen Zeitraum von 3 h bei 110 °C ausgeheizt. Man erhielt ein zweiphasiges Endprodukt, welches nicht weiter analysiert wurde.

### Beispiel 19, Vergleich

In einen 2 1 Laborautoklaven wurden unter Stickstoffatmosphäre 35,8 g Propylenglykol und 1,682 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Druck wurde sodann auf 100 mbar gesenkt und der Inhalt des Autoklaven wurde unter Rühren (Kreuzbalkenrührer, 800 U/min) auf 150 °C erwärmt. Nach Erreichen dieser Temperatur wurden über einen Zeitraum von 3,4 h 338,4 g Propylenoxid mit einer konstanten Dosierrate in den Kopfraum des Reaktors dosiert. Nach einer Nachreaktionsphase von 13 h Dauer wurde das erhaltene Zwischenprodukt, ein Diol mit einer rechnerischen OH-Zahl von 160 mg KOH / g (Polyoxyalkylenpolyol (a)) zunächst für einen Zeitraum von 1,25 h auf 80 mbar evakuiert und dann auf 80 °C abgekühlt. Es wurden unter Stickstoff 169,2 g einer 70-%igen Lösung von Sorbit (Startersubstanz (b')) in Wasser, 3,324 g einer Lösung (44,89 Gew.-%) von KOH in Wasser und 219,6 g Saccharose (Startersubstanz (c')) in den Reaktor gegeben. Der Autoklav wurde verschlossen, die Temperatur wurde unter Rühren (800 U/min) auf 110 °C erhöht und der Druck wurde auf ca. 80 mbar abgesenkt. Nach 15 min. wurde bei weiter laufender Vakuumpumpe begonnen 50 ml Stickstoff pro Minute über einen unter dem Flüssigkeitsspiegel liegenden Verteilerring einzuleiten. Diese Stickstoffeinleitung ("Strippen") wurde über einen Zeitraum von 3 Stunden aufrechterhalten. Danach wurde bei 110 °C mit der Dosierung von insgesamt 787,2 g Propylenoxid in den Kopfraum des Reaktors begonnen. Die Propylenoxiddosierphase dauerte 9,5 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 4,0 h Dauer wurde der Inhalt des Autoklaven auf 80 °C abgekühlt und es wurden 5,133 g einer 85 gew.-%igen Lösung von Milchsäure in Wasser zugegeben. Nach Zugabe von 0,763 g IRGANOX® 1076 wurde 30 min. bei 80 °C nachgerührt. Der Inhalt des Autoklaven wurde in eine Vierhalskolbenrührapparatur abgelassen und dort bei 80 °C mittels Wasserstrahlpumpe über einen Zeitraum von 3 Stunden entwässert. Schließlich wurde das Produkt im Ölpumpenvakuum (5 mbar) über einen Zeitraum von 3 h bei 110 °C ausgeheizt. Die Differenz zwischen der mittleren OH-Zahl des Alkylenoxidadduktes der H-funktionellen Startersubstanzen b' und c' und der OH-Zahl desr Polyoxyalkylenpolyols (a) betrug 290 mg KOH / g. Man erhielt ein zweiphasiges Endprodukt, welches nicht weiter analysiert wurde.

### Beispiel 20, Vergleich

In einen 2 1 Laborautoklaven wurden unter Stickstoffatmosphäre 40,1 g Dipropylenglykol und 0,835 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,54 bar (absolut) wurden über einen Zeitraum von 6,57 h 329,4 g Propylenoxid in den Kopfraum des Reaktors dosiert. Nach einer Nachreaktionsphase von 8,5 h Dauer wurde das erhaltene Zwischenprodukt, ein Diol mit einer rechnerischen OH-Zahl von 100 mg KOH / g (Polyoxyalkylenpolyol (a)), bei 110 °C über einen Zeitraum von 0,51 h bei einem Druck von 20 mbar ausgeheizt und danach auf 50 °C abgekühlt. Es wurden sodann unter Stickstoff 216,6 g einer 70-%igen Lösung von Sorbit in Wasser (Startersubstanz (b')), 285,0 g Saccharose (Startersubstanz (c')) und 4,153 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 19 mbar abgesenkt. Nach 3 h Entwässerungszeit wurde die Vakuumleitung geschlossen und die Rührerdrehzahl auf 800 U/min erhöht. Bei 110 °C wurde mit der Dosierung von insgesamt 693,9 g Propylenoxid in den Kopfraum des Reaktors begonnen. Die Propylenoxiddosierphase dauerte 8,7 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 6,5 h Dauer wurde der Inhalt des Autoklaven bei 120 °C über einen Zeitraum von 35 min. im Vakuum (40 mbar) ausgeheizt. Nach Abkühlen auf 80 °C wurden 4,776 g einer 85 gew.-%igen Lösung von Milchsäure in Wasser zugegeben. Nach Zugabe von 0,742 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein mehrphasiges, trübes Endprodukt, welches bei Raumtemperatur nahezu vollständig erstarrte. OH-Zahl und Viskosität wurden nicht ermittelt. Die Differenz zwischen der mittleren OH-Zahl des Alkylenoxidadduktes der H-funktionellen Startersubstanzen b' und c' und der OH-Zahl desr Polyoxyalkylenpolyols (a) betrug 478 mg KOH / g.

### Beispiel 21, Vergleich

In einen 2 1 Laborautoklaven wurden unter Stickstoffatmosphäre 40,9 g Dipropylenglykol und 0,836 g einer Lösung (44,89 Gew.-%) von KOH in Wasser gegeben. Der Autoklav wurde verschlossen und Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 800 U/min) auf 130 °C erwärmt. Nach Erreichen dieser Temperatur und bei einem Startdruck von 1,54 bar (absolut) wurden über einen Zeitraum von 8,0 h 329,4 g Propylenoxid in den Kopfraum des Reaktors dosiert. Nach einer Nachreaktionsphase von 9,0 h Dauer wurde das erhaltene Zwischenprodukt, ein Diol mit einer rechnerischen OH-Zahl von 102 mg KOH / g (Startersubstanz a'), bei 110 °C über einen Zeitraum von 1,7 h bei einem Druck von 22 mbar ausgeheizt und danach auf 50 °C abgekühlt. Es wurden sodann unter Stickstoff 201,5 g einer 70-%igen Lösung von Sorbit in Wasser (Startersubstanz b'), 265,1 g Saccharose (Startersubstanz c') und 4,170 g einer Lösung (44,89 Gew.-%) von KOH in Wasser in den Reaktor gegeben. Der Autoklav wurde verschlossen, die Temperatur wurde unter Rühren (100 U/min) auf 110 °C erhöht und der Druck wurde auf ca. 30 mbar abgesenkt. Nach 3 h Entwässerungszeit wurde die Vakuumleitung geschlossen und die Rührerdrehzahl auf 800 U/min erhöht. Bei 110 °C wurde mit der Dosierung von insgesamt 724,0 g Propylenoxid in den Kopfraum des Reaktors begonnen. Die Propylenoxiddosierphase dauerte 9,3 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 5,5 h Dauer wurde der Inhalt des Autoklaven bei 120 °C über einen Zeitraum von 25 min. im Vakuum (50 mbar) ausgeheizt. Nach Abkühlen auf 80 °C wurden 5,102 g einer 85 gew.-%igen Lösung von Milchsäure in Wasser zugegeben. Nach Zugabe von 0,755 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein mehrphasiges, trübes Endprodukt, welches bei Raumtemperatur nahezu vollständig erstarrte. OH-Zahl und Viskosität wurden nicht ermittelt. Die Differenz zwischen der mittleren OH-Zahl des Alkylenoxidadduktes der H-funktionellen Startersubstanzen b' und c' und der OH-Zahl des Polyoxyalkylenpolyols (a) betrug 436 mg KOH / g.

### Beispiel 22, Vergleich

In einen 2 1 Laborautoklaven wurden unter Stickstoffatmosphäre 186,0 g eines propylenglykolgestarteten Propylenoxidadduktes mit einer OHZ von 56 mg KOH / g (Polyoxyalkylenpolyol (a)) und 192,7 g einer 70-%igen Lösung von Sorbit in Wasser (Startersubstanz (b')) gegeben. Nach Zugabe von 5,020 g einer Lösung (44,89 Gew.-%) von KOH in Wasser und 253,5 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U/min) auf 110 °C erwärmt und der Druck wurde auf ca. 30 mbar abgesenkt. Nach 3,7 h Entwässerungszeit wurde die Vakuumleitung geschlossen und die Rührerdrehzahl auf 800 U/min erhöht. Bei 110 °C wurde mit der Dosierung von insgesamt 927,9 g Propylenoxid in den Kopfraum des Reaktors begonnen. Die Propylenoxiddosierphase dauerte 10,5 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 5,1 h Dauer wurde der Inhalt des Autoklaven bei 120 °C über einen Zeitraum von 1,0 h im Vakuum (58 mbar) ausgeheizt. Nach Abkühlen auf 80 °C wurden 5,463 g einer 85 gew.-%igen Lösung von Milchsäure in Wasser zugegeben. Nach Zugabe von 0,760 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein trübes Endprodukt. Die OH-Zahl-Bestimmung war aufgrund der Inhomogenität nicht verlässlich durchführbar. Die Differenz zwischen der mittleren OH-Zahl des Alkylenoxidadduktes der H-funktionellen Startersubstanzen b' und c' und der OH-Zahl des Polyoxyalkylenpolyols (a) betrug 386 mg KOH / g.

### Beispiel 23, Vergleich

In einen 2 1 Laborautoklaven wurden unter Stickstoffatmosphäre 185,3 g eines propylenglykolgestarteten Propylenoxidadduktes mit einer OHZ von 56 mg KOH / g (Polyoxyalkylenpolyol (a)) und 168,2 g einer 70-%igen Lösung von Sorbit in Wasser (Startersubstanz (b')) gegeben. Nach Zugabe von 5,011 g einer Lösung (44,89 Gew.-%) von KOH in Wasser und 221,2 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U/min) auf 110 °C erwärmt und der Druck wurde auf ca. 40 mbar abgesenkt. Nach 3,5 h Entwässerungszeit wurde die Vakuumleitung geschlossen und die Rührerdrehzahl auf 800 U/min erhöht. Bei 110 °C wurde mit der Dosierung von insgesamt 975,8 g Propylenoxid in den Kopfraum des Reaktors begonnen. Die Propylenoxiddosierphase dauerte 10,9 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 4,9 h Dauer wurde der Inhalt des Autoklaven bei 120 °C über einen Zeitraum von 3,0 h im Vakuum (58 mbar) ausgeheizt. Nach Abkühlen auf 80 °C wurden 5,160 g einer 85 gew.-%igen Lösung von Milchsäure in Wasser zugegeben. Nach Zugabe von 0,785 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein trübes Endprodukt, von dem OH-Zahl und Viskosität nicht ermittelt wurden. Die Differenz zwischen der mittleren OH-Zahl des Alkylenoxidadduktes der H-funktionellen Startersubstanzen b' und c' und der OH-Zahl des Polyoxyalkylenpolyols (a) betrug 344 mg KOH / g.

### Beispiel 24, Vergleich

In einen 2 1 Laborautoklaven wurden unter Stickstoffatmosphäre 184,8 g eines propylenglykolgestarteten Propylenoxidadduktes mit einer OHZ von 112 mg KOH / g (Polyoxyalkylenpolyol (a)) und 102,2 g Glycerin (Startersubstanz (b')) gegeben. Nach Zugabe von 5,026 g einer Lösung (44,89 Gew.-%) von KOH in Wasser und 401,8 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U/min) auf 110 °C erwärmt und der Druck wurde auf ca. 20 mbar abgesenkt. Nach 3,0 h Entwässerungszeit wurde die Vakuumleitung geschlossen und die Rührerdrehzahl auf 800 U/min erhöht. Bei 110 °C wurde mit der Dosierung von insgesamt 811,8 g Propylenoxid in den Kopfraum des Reaktors begonnen. Die Propylenoxiddosierphase dauerte 9,6 h, die Dosierrate wurde sukzessive von 25 g / h auf den Endwert von 120 g / h gesteigert und die Temperatur wurde während der Propylenoxiddosierung auf 120 °C angehoben. Nach einer Nachreaktionsphase von 4,0 h Dauer wurde der Inhalt des Autoklaven bei 120 °C über einen Zeitraum von 1,0 h im Vakuum (28 mbar) ausgeheizt. Nach Abkühlen auf 80 °C wurden 5,188 g einer 85 gew.-%igen Lösung von Milchsäure in Wasser zugegeben. Nach Zugabe von 0,769 g IRGANOX® 1076 wurde zunächst 30 min. bei 80 °C nachgerührt. Schließlich wurde das Produkt im Vakuum (20 mbar) über einen Zeitraum von 3 h bei 110 °C ausgeheizt. Man erhielt ein trübes, bei Raumtemperatur nahezu festes Endprodukt mit einer OHZ von 482 mg KOH / g und einer Viskosität (50 °C) von 3605 mPas. Die Differenz zwischen der mittleren OH-Zahl des Alkylenoxidadduktes der H-funktionellen Startersubstanzen b' und c' und der OH-Zahl des Polyoxyalkylenpolyols (a) betrug 430 mg KOH / g.

### Beispiel 25, Vergleich (gemäß DE 102 37 910 A1 und DE 102 37 914 A1)

In einen 2 1 Laborautoklaven wurden unter Stickstoffatmosphäre 166,9 g einer 70-%igen Lösung von Sorbit in Wasser (Startersubstanz (b')) gegeben. Nach Zugabe von 5,032 g einer Lösung (44,89 Gew.-%) von KOH in Wasser und 350,5 g Saccharose (Startersubstanz (c')) wurde der Autoklav verschlossen. Sauerstoff wurde bei Raumtemperatur durch 5-maliges Beaufschlagen des Autoklaven mit Stickstoff bis zu einem Absolutdruck von 3 bar und anschließendes Ablassen des Überdrucks auf Normaldruck entfernt. Der Inhalt des Autoklaven wurde unter Rühren (Kreuzbalkenrührer, 100 U/min) auf 110 °C erwärmt und der Druck wurde auf ca. 40 mbar abgesenkt. Nach 3,5 h Entwässerungszeit wurde die Vakuumleitung geschlossen und die Rührerdrehzahl auf 800 U/min erhöht. Bei 110 °C wurde mit der Dosierung von insgesamt 1033,0 g Propylenoxid in den Kopfraum des Reaktors begonnen. Die Propylenoxiddosierphase dauerte 11,7 h; aufgrund der anfangs schlechten Aufnahme des Propylenoxids musste die Dosierung 3 mal komplett gestoppt werden, erst gegen Ende konnte kontinuierlich dosiert werden mit bis zu 150 g / h. Die Reaktionstemperatur wurde während der Propylenoxiddosierphase auf 120 °C angehoben. Nach einer Nachreaktionsphase von 3,5 h Dauer wurde der Inhalt des Autoklaven bei 120 °C über einen Zeitraum von 40 min im Vakuum (59 mbar) ausgeheizt. Nach Abkühlen auf 80 °C wurden 5,133 g einer 85 gew.-%igen Lösung von Milchsäure in Wasser zugegeben. Nach Zugabe von 0,645 g IRGANOX® 1076 wurde zunächst 30 min. bei 80 °C nachgerührt. Schließlich wurde das Produkt im Ölpumpenvakuum (5 mbar) über einen Zeitraum von 3 h bei 110 °C ausgeheizt. Man erhielt ein klares, homogenes Endprodukt mit einer gemessenen OH-Zahl von 440 mg KOH / g und einer Viskosität von 107000 mPas bei 25 °C.

**Tabelle 1: Zusammenstellung der Funktionalität und OHZ des Polyoxyalkylenpolyols (a); Funktionalitäten der Startersubstanzen b' und c'; mittlere Funktionalität der Startersubstanzen b' und c' und der Anwesenheit einer Startersubstanz b' oder c' mit einer Schmelztemperatur von < 150 °C sowie die daraus resultierenden OHZ, Viskositäten, OHZ-Differenzen sowie das Phasenverhalten der Polyoxyalkylenpolyol - Mischungen (bei Raumtemperatur).**

| Beispiel | Funktionalität des Polyoxyalkylenpolyols (a) | (Ber.)^{##} OHZ des Polyoxyalkylenpolyols (a) [mg KOH/ g] | Funktionalität der Startersubstanz b' | Funktionalität der Startersubstanz c' | Mittlere (ber.) OHZ der Polyoxyalkylenpolyole b und c [mg KOH/g] | Mittlere Funktionalität der Startersubstanzen b' und c' | Schmelztemperaturen einer der beiden Startersubstanzen b' und c' < 150 °C? | Gemessene OHZ der Polyoxyalkylenpolyol-Mischung [mg KOH / g] | Viskosität der Polyoxy alkylen-polyol-Mischung bei 25 °C | OH-Zahl Differenz^{#} [mg KOH / g] | Phasen verhalten des Endprodukts (Raumtemperatur); |
|---|---|---|---|---|---|---|---|---|---|---|---|
| 1 (erf.) | 2 | 112 | 6 | 8 | 450 | 7,0 | ja | 350 | 10200 mPas | 338 | homogen, klar; |
| 2 (erf.) | 2 | 112 | 6 | 8 | 450 | 7,0 | ja | 342 | 10300 mPas | 338 | homogen, klar; |
| 3 (erf.) | 2 | 100 | 6 | 8 | 453 | 7,0 | ja | 368 | 19250 mPas | 353 | homogen, klar; |
| 4 (erf.) | 2 | 140 | 6 | 8 | 440 | 7,0 | ja | 377 | 12100 mPas | 300 | homogen, klar; |
| 5 (erf.) | 2 | 114 | 6 | 8 | 495 | 7,0 | ja | 404 | 28700 mPas | 381 | homogen, klar; |
| 6 (erf.) | 2 | 112 | 6 | 8 | 444 | 7,0 | ja | 415 | 37900 mPas | 332 | homogen, klar; |
| 7 (erf.) | 2 | 121 | 3 | 8 | 495 | 5,6 | ja | 405 | 12950 mPas | 374 | homogen, klar; |
| 8 (erf.) | 2 | 121 | 3 | 8 | 495 | 5,2 | ja | 413 | 8915 mPas | 374 | homogen, klar; |
| 9 (erf.) | 2 | 112 | 3 | 8 | 495 | 5,6 | ja | 443 | 25850 mPas | 383 | homogen, klar; |
| 10 (erf.) | 2 | 112 | 3 | 8 | 512 | 5,6 | ja | 457 | 31900 mPas | 400 | homogen, klar; |
| 11 (erf.) | 2 | 141 | 6 | 8 | 486 | 7,0 | ja | 409 | 21750 mPas | 345 | homogen, klar; |

| Beispiel | Funktionalität des Polyoxyalkylenpolyols (a) | (Ber.)^{##} OHZ des Polyoxyalkylenpolyols (a) [mg KOH / g] | Funktionalität der Startersubstanz b' | Funktionalität der Starter- c' substanz C | Mittlere (ber.) OHZ der Polyoxyalkylenpolyole b und c [mg KOH / g] | Mittlere nalität der Starter- c' substanzen b' und c' | Funktio-Schmelztemperaturen einer der beiden Startersubstanzen b' und c' < 150 °C? | Gemessene OHZ-der Polyoxyalkylen -polyol-Mischung [mg KOH / g] | Viskosität der Polyoxyalkylenpolyol-Mischung bei 25 °C | OH-Zahl Differenz^{#} [mg KOH / g] | Phasenverhalten des Endprodukts (Raumtemperatur); |
|---|---|---|---|---|---|---|---|---|---|---|---|
| 12 (erf.) | 2 | 112 | 3 | 8 | 495 | 5,6 | ja | 441 | 28300 mPas | 383 | homogen, klar; |
| 13 (erf.) | 3 | 117 | 6 | 8 | 441 | 7,0 | ja | 402 | 37900 mPas | 324 | homogen, klar; |
| 14 (erf.) | 2 | 112 | 3 | 8 | 489 | 5,4 | ja | 460 | 39850 mPas | 377 | homogen, klar; |
| 15 (Vg1.) | 2 | 213 | Startersubstanz b' nicht vorhanden | 8 | n. b. | 8,0 | nein | n. d. | n. d. | n. b. | n. b. |
| 16 (Vg1.) | 2 | 112 | 2 (Wasser) | 8 | n. b. | 8,0 | ja | n. d. | n. d. | n. b. | zweiphasig |
| (Vg1.) | 2 | 112 | 2 (Wasser) | 8 | n. b. | < 8,0 | ja | n. d. | n. d. | n. b. | Zweiphasig |
| 18 (Vgl.) | 2 | 170 | 2 (Wasser) | 8 | n. b. | < 8,0 | ja | n. d. | n. d. | 330 | zweiphasig |
| 19 (Vgl.) | 2 | 160 | 6 | 8 | 450 | 7,0 | ja | n. d. | n. d. | 290 | zweiphasig |
| 20 (Vgl.) | 2 | 100 | 6 | 8 | 578 | 7,0 | ja | n. d. | n. d. | 478 | mehrphasig, nahezu fest |

| Beispiel | Funktionalität des Polyoxyalkylenpolyols (a) | (Ber.)^{##} OHZ des Polyoxyalkylenpolyols (a) [mg KOH/ g] | Funktionalität der Startersubstanz b' | Funktionalität der Startersubstanz c' | Mittlere (ber.) OHZ der Polyoxyalkylenpolyole b und c [mg KOH / g] | Mittlere Funktionalität der Startersubstanzen b' und c' | Schmelztemperatur einer der beiden Startersubstanz en b' und c' < 150 °C? | Gemessene OHZ-der Polyoxyalkyl en-polyol-Mischung [mg KOH / g] | Viskosität der Polyoxyalkylenpolyol-Mischung | OH-Zahl Differenz^{#} [mg KOH / g] | Phasenverh alten des Endprodukt s (Raumtemperatur); |
|---|---|---|---|---|---|---|---|---|---|---|---|
| 21 (Vgl.) | 2 | 102 | 6 | 8 | 538 | 7,0 | ja | n. d. | n. d. | 436 | mehrphasig, nahezu fest |
| 22 (Vgl.) | 2 | 56 | 6 | 8 | 442 | 7,0 | ja | n. d. | n. d. | 386 | trüb |
| 23 (Vgl.) | 2 | 56 | 6 | 8 | 400 | 7,0 | ja | n. d. | n. d. | 344 | trüb |
| 24 (Vgl.) | 2 | 112 | 3 | 8 | 542 | 5,6 | ja | 482 | 3605 mPas bei 50 °C | 430 | Trüb, nahezu fest |
| 25 (Vgl.) | nicht vorhanden | - | 6 | 8 | 440 | 7,2 | ja | 440 | 107000 mPas bei 25 °C | - | Homogen, klar_{;} |

| | | | | | | | | | | | |
|---|---|---|---|---|---|---|---|---|---|---|---|
| ^{#}:Differenz zwischen der berechneten, mittleren OH-Zahl des Alkylenoxidadduktes der H-funktionellen Startersubstanzen (b') und (c') und der OH-Zahl des Polyoxyalkylenpolyols (a) ^{##}: Wurde das Polyoxyalkylenpolyol (a) direkt gemeinsam mit den H-funktionellen Startersubstanzen eingesetzt, so wurde seine nach DIN 53240 bestimmte OH-Zahl angegeben. Wurde das Polyoxyalkylenpolyol (a) *in situ* aus einer geeigneten Starterverbindung hergestellt, so wurde seine rechnerische OH-Zahl angegeben. Einzelheiten sind den entsprechenden Beispielbeschreibungen zu entnehmen. n. d.: nicht bestimmt n. b.: nicht berechnet | | | | | | | | | | | |

## Patentansprüche

1. Verfahren zur Herstellung einer Polyoxyalkylenpolyol - Mischung umfassend mindestens 3 Polyoxyalkylenpolyole (a), (b) und (c),
wobei die mittlere OH-Zahl der Polyoxyalkylenpolyol-Mischung 290 - 560 mg KOH / g beträgt und die OH-Zahl gemäß der Vorschrift der DIN 53240 bestimmt worden ist;
wobei die berechnete mittlere OH-Zahl der Polyoxyalkylenpolyole (b) und (c) mindestens 360 mg KOH / g beträgt und die Polyoxyalkylenpolyol - Mischung durch Umsetzung eines Gemisches, umfassend mindestens ein Polyoxyalkylenpolyol (a), mindestens eine H-funktionelle Startersubstanz (b') und mindestens eine H-funktionelle Startersubstanz (c') mit einer OH-reaktiven Verbindung, optional in Gegenwart eines Katalysators, erhalten wird,
wobei das Verfahren folgende Schritte umfasst
i) Bereitstellen einer Mischung (i) umfassend das Polyoxyalkylenpolyol (a), die H-funktionelle Startersubstanz (b'), sowie die H-funktionelle Startersubstanz (c');
ii) Umsetzen der Mischung (i) mit der OH-reaktiven Verbindung optional in Gegenwart des Katalysators;
wobei das Polyoxyalkylenpolyol (a) eine Funktionalität F(a) von 2 bis 3 und eine berechnete OH-Zahl von 60 bis 168 mg KOH / g aufweist;
wobei die H-funktionelle Startersubstanz (b') eine Funktionalität F(b') von 3 bis 8 und eine berechnete molare Masse von mindestens 60 g/mol aufweist;
wobei die H-funktionellen Startersubstanz (c') eine Funktionalität F(c') von 3 bis 8 und eine berechnete molare Masse von mindestens 60 g/mol aufweist;
wobei die H-funktionelle Startersubstanz (b') von der H-funktionellen Startersubstanz (c') verschieden ist;
wobei die Schmelztemperatur der H-funktionellen Startersubstanz (b') und/oder der H-funktionellen Startersubstanz (c') bestimmt nach ASTM E324 (11/2016) kleiner als 150 °C ist und die berechnete zahlenmittlere Funktionalität der Mischung der H-funktionellen Startersubstanzen (b') und (c') mindestens 4,5 beträgt,
und wobei die Differenz zwischen der berechneten mittleren OH-Zahl der Polyoxyalkylenpolyole (b) und (c) und der OH-Zahl des Polyoxyalkylenpolyols (a) zwischen 295 und 405 mg KOH / g beträgt.

2. Verfahren gemäß Anspruch 1, wobei das Umsetzen der Mischung (i) mit der OH-reaktiven Verbindung in Schritt (ii) in Gegenwart des Katalysators erfolgt.

3. Verfahren gemäß Anspruch 1 oder 2, wobei der Katalysator ein basischer, ein Brönstedt-saurer, ein Lewis-saurer und/oder ein Doppelmetallcyanidkatalysator, bevorzugt ein basischer Katalysator ist.

4. Verfahren gemäß Anspruch 3, wobei der Katalysator ein basischer Katalysator ist und der basische Katalysator ein Alkalihydroxid, Erdalkalihydroxid und/oder Amin ist.

5. Verfahren gemäß Anspruch 4, wobei der basische Katalysator ein Amin ist.

6. Verfahren gemäß einem der Ansprüche 1 bis 5,wobei der Massenanteil des mindestens einen Polyoxyalkylenpolyols (a) 2 bis 30 Gew.-%, bevorzugt 5 bis 30 Gew.-%, bezogen auf die Masse der Polyoxyalkylenpolyol - Mischung, beträgt

7. Verfahren gemäß einem der Ansprüche 1 bis 6, wobei die Startersubstanz (b') eine Funktionalität von 3 bis 8 und die Startersubstanz (c') eine Funktionalität von 6 bis 8 besitzt.

8. Verfahren gemäß einem der Ansprüche 1 bis 7, wobei eine der Startersubstanzen (b') oder (c') einen Schmelzpunkt von größer 150 °C und eine der Startersubstanzen (b') oder (c') einen Schmelzpunkt von kleiner 150 °C aufweist, wobei die Schmelzpunkte mittels ASTM E324 (11/2016) bestimmt wurden.

9. Verfahren gemäß einem der Ansprüche 1 bis 8, wobei der Massenanteil der H-funktionellen Startersubstanz (b') bezogen auf die Gesamtmasse der H-funktionellen Startersubstanz (b') und der H-funktionellen Startersubstanz (c') 15 Gew.-% bis 40 Gew.-% beträgt.

10. Verfahren gemäß einem der Ansprüche 1 bis 9, wobei die OH-reaktive Verbindung ein Alkylenoxid und/oder ein Fettsäureester, bevorzugt ein Alkylenoxid ist.

11. Verfahren gemäß Anspruch 10, wobei die OH-reaktive Verbindung ein Alkylenoxid ist.

12. Verfahren gemäß Anspruch 11, wobei das Alkylenoxid Propylenoxid und/oder Ethylenoxid bevorzugt Propylenoxid ist.

13. Polyoxyalkylenpolyol - Mischung erhältlich nach einem der Ansprüche 1 bis 12.

14. Polyoxyalkylenpolyol - Mischung gemäß Anspruch 13 mit einer Viskosität von 5000-60000 mPas bei 25°C bestimmt mittels Rotationsviskosimeter nach der Vorschrift der DIN 53018.

15. Verfahren zur Herstellung von Polyurethanen durch Umsetzung der Polyoxyalkylenpolyol - Mischung gemäß Anspruch 13 oder 14 mit einem Polyisocyanat.
